(19) Europäisches Patentamt
European Patent Office
Office européen des brevets

(11) EP 4 015 542 B1

(12) EUROPEAN PATENT SPECIFICATION

(45) Date of publication and mention of the grant of the patent:
**12.11.2025 Bulletin 2025/46**

(21) Application number: **21821241.3**

(22) Date of filing: **10.06.2021**

(51) International Patent Classification (IPC):
***C08F 110/02*** *(2006.01)* ***C08K 3/04*** *(2006.01)*
***C08F 8/22*** *(2006.01)* ***C08F 4/659*** *(2006.01)*
***C08F 4/6592*** *(2006.01)* ***C08K 3/34*** *(2006.01)*

(52) Cooperative Patent Classification (CPC):
(C-Sets available)
**C08F 110/02; C08F 8/22; C08K 3/04;**
C08F 4/65912; C08F 4/65916; C08F 2420/02;
C08F 2420/06; C08F 2420/07; C08F 2420/10;
C08K 3/346 (Cont.)

(86) International application number:
**PCT/KR2021/007264**

(87) International publication number:
**WO 2021/251766 (16.12.2021 Gazette 2021/50)**

# (54) POLYETHYLENE AND CHLORINATED POLYETHYLENE THEREOF

POLYETHYLEN UND CHLORIERTES POLYETHYLEN DAVON

POLYÉTHYLÈNE ET SON POLYÉTHYLÈNE CHLORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2020 KR 20200070525**
**09.06.2021 KR 20210075020**

(43) Date of publication of application:
**22.06.2022 Bulletin 2022/25**

(73) Proprietor: **LG Chem, Ltd.**
**Seoul 07336 (KR)**

(72) Inventors:
- **LEE, Si Jung**
**Daejeon 34122 (KR)**
- **KIM, Sun Mi**
**Daejeon 34122 (KR)**
- **JEONG, Cheolhwan**
**Daejeon 34122 (KR)**
- **HONG, Bog Ki**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 770 185**
**EP-A1- 3 778 664**
**WO-A1-2009/032051**
**CN-A- 111 187 304**
**KR-A- 20150 058 938**
**KR-A- 20150 139 462**
**KR-A- 20170 030 924**
**KR-A- 20190 068 631**
**KR-A- 20200 026 125**
**KR-A- 20200 071 033**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets

**C08F 8/22, C08F 110/02;**
**C08K 3/04, C08L 23/286;**

C08F 110/02, C08F 4/65904;
C08F 110/02, C08F 4/65927, C08F 4/65925;
C08F 110/02, C08F 2500/12, C08F 2500/07,
C08F 2500/04, C08F 2500/37, C08F 2500/17;
C08K 3/346, C08L 23/286

## Description

[TECHNICAL FIELD]

### CROSS CITATION WITH RELATED APPLICATION(S)

The present application is based on, and claims priority from, Korean Patent Application Nos. 10-2020-0070525 and 10-2021-0075020, filed on June 10, 2020, and June 9, 2021, respectively.

The present invention relates to an ethylene homopolymer which may prepare a chlorinated polyethylene having excellent processability and size stability during high-speed extrusion by optimizing a high-crystalline region in a molecular structure, and a chlorinated polyethylene thereof.

[BACKGROUND]

Chlorinated polyethylene prepared by reacting polyethylene with chlorine is known to have more improved physical and mechanical properties than polyethylene. In particular, since chlorinated polyethylene is able to resist harsh external environments, it may be used as a packing material such as various containers, fibers, or hoses, and a heat transfer material.

Chlorinated polyethylene (CPE) is widely used for wires and cables by compounding with inorganic additives and crosslinking agents, and may be generally prepared by reacting polyethylene with chlorine in a suspension, or by reacting polyethylene with chlorine in an aqueous HCl solution. This CPE compound product requires excellent tensile strength, and strength of the compound varies depending on physical properties of the chlorinated polyethylene. In the case of general-purpose chlorinated polyethylenes which are widely known at present, polyethylene prepared using a Ziegler-Natta catalyst is applied, and due to its broad molecular weight distribution, there is a disadvantage in that the tensile strength is poor when preparing the CPE compound. When a metallocene catalyst is applied, processability may be generally poor due to a narrow molecular weight distribution. However, the processability is improved by decreasing hardness of CPE due to excellent uniformity in chlorine distribution.

However, when processed into products such as thin electric wires or cables, a high-speed extrusion process is performed. Thus, a method of minimizing a processing-load has been continuously studied to improve extrusion processability and size stability even when polyethylene and chlorine are reacted and subjected to high-speed extrusion.

Accordingly, in order to remarkably improve extrusion processability and size stability during high-speed extrusion, excellent chlorine distribution uniformity is required in chlorinated polyethylene. To this end, there is a continuous demand for developing a process capable of preparing a polyethylene having a molecular structure in which a high-crystalline region is optimized.

EP 3 778 664 A1 (prior art under Art. 54(3) EPC) describes a polyethylene and its use for producing chlorinated polyethylene. The polyethylene has an entanglement molecular weight of 9,500 to 13,500 g/mol, a melt flow rate ratio MFRR $_{21.5/5}$ of 16 to 25, and a molecular weight distribution of 5.5 to 10. The example polymers have a melt index at 5 kg load of 0.70 to 0.91 g/10 minutes.

KR 10 2017 0030924 refers to a polyethylene that has a melt flow index under a load of 5 kg of 1.0 to 5.0 g/10 minutes and a melt flow rate ratio $MI_{21.6/5}$ of 14 to 30.

EP 3 770 185 describes a polyethylene and a chlorinated polyethylene obtained therefrom. The polyethylene is described as having a narrow particle size distribution and being able to minimize a change in the crystal structure, thereby being able to prepare chlorinated polyethylene with high productivity and thermal stability. The example polymers are prepared using a hybrid metallocene catalyst. The document is silent on $MFR_{21.6}$ and TREF measurements.

[DETAILED DESCRIPTION OF THE INVENTION]

[Technical Problem]

In the present disclosure, there is provided an ethylene homopolymer which may prepare a chlorinated polyethylene having excellent processability and size stability during high-speed extrusion by optimizing a high-crystalline region in a molecular structure, and a chlorinated polyethylene thereof.

In addition, the present disclosure is to provide a process for preparing the ethylene homopolymer.

[Technical Solution]

In an embodiment of the present disclosure, there is provided an ethylene homopolymer, having a $MI_5$ (a melt index measured at 190 °C under a load of 5 kg) of 0.95 g/10min to 1.4 g/10min, a melt flow rate ratio ($MFRR_{21.6/5}$, a value

obtained by dividing a melt index measured at 190 °C under a load of 21.6 kg by the melt index measured at 190 °C under a load of 5 kg in accordance with ASTM D 1238) of 18 to 22, and a high-crystalline region ratio on a temperature rising elution fractionation (TREF) graph of 10% or less, wherein the high-crystalline region ratio is a percentage value obtained by dividing a graph area of the high-crystalline region at an elution temperature of 105 °C or higher by a total graph area.

In addition, the present disclosure provides a process for preparing the ethylene homopolymer.

The present disclosure also provides a chlorinated polyethylene prepared by reacting the polyethylene with chlorine.

[ADVANTAGEOUS EFFECTS]

A polyethylene according to the present disclosure has an optimized high-crystalline region in a molecular structure and is reacted with chlorine to prepare a chlorinated polyethylene having excellent processability and size stability during high-speed extrusion.

[BRIEF DESCRIPTION OF DRAWING]

FIG. 1 shows a temperature rising elution fractionation (TREF) graph of a polyethylene of Example 1-1 and a polyethylene of Comparative Example 1-1 according to one embodiment of the present disclosure.

[DETAILED DESCRIPTION OF THE EMBODIMENTS]

In the present disclosure, the terms "the first", "the second", etc. are used to describe a variety of components, and these terms are merely employed to distinguish a certain component from other components.

The singular forms are intended to include the plural forms as well, unless the context clearly indicates otherwise. It will be further understood that the terms "include", "have", or "possess", when used in this specification, specify the presence of stated features, numbers, steps, components, or combinations thereof, but do not preclude the presence or addition of one or more other features, numbers, steps, components, or combinations thereof.

Further, "parts by weight" as used herein refers to a relative concept of a ratio of the weight of the remaining material based on the weight of a specific material. For example, in a mixture containing 50 g of material A, 20 g of material B, and 30 g of material C, the amounts of materials B and C based on 100 parts by weight of material A are 40 parts by weight and 60 parts by weight, respectively.

In addition, "wt% (% by weight)" refers to an absolute concept of expressing the weight of a specific material in percentage based on the total weight. In the above-described mixture, the contents of materials A, B, and C based on 100% of the total weight of the mixture are 50% by weight, 20% by weight, and 30% by weight, respectively. At this time, a sum of the contents of respective components does not exceed 100% by weight.

Hereinafter, the present disclosure will be described in more detail.

According to one embodiment of the present disclosure, there is provided a ethylene homopolymer which may prepare a chlorinated polyethylene having excellent processability and size stability during high-speed extrusion by realizing a molecular structure in which a high-crystalline region is optimized.

The ethylene homopolymer is characterized in that $MI_5$ (a melt index measured at 190 °C under a load of 5 kg) is 0.95 g/10min to 1.4 g/10min, a melt flow rate ratio ($MFRR_{21.6/5}$, a value obtained by dividing a melt index measured at 190 °C under a load of 21.6 kg by the melt index measured at 190 °C under a load of 5 kg in accordance with ASTM D 1238) is 18 to 22, and a high-crystalline region ratio on a temperature rising elution fractionation (TREF) graph is 10% or less, wherein the high-crystalline region ratio is a percentage value obtained by dividing a graph area of the high-crystalline region at an elution temperature of 105 °C or higher by a total graph area.

The ethylene homopolymer according to the present disclosure may provide a chlorinated polyethylene having excellent processability and size stability during high-speed extrusion by optimizing the high-crystalline region in the molecular structure.

In particular, the ethylene homopolymer of the present disclosure has a reduced high-crystalline region in the molecular structure, and thus residual crystals of chlorinated polyethylene are reduced under the same chlorination conditions. As the residual crystals of chlorinated polyethylene are reduced, hardness becomes low, and a chlorinated polyethylene compound using the same has excellent dispersity, thereby remarkably improving processability indicated by Mooney viscosity and size stability indicated by plasticity.

The ethylene homopolymer is prepared by optimizing a specific metallocene catalyst as described below, and thus $MI_5$ (a melt index measured at 190 °C under a load of 5 kg) and a melt flow rate ratio ($MFRR_{21.6/5}$, a value obtained by dividing a melt index measured at 190 °C under a load of 21.6 kg by the melt index measured at 190 °C under a load of 5 kg in accordance with ASTM D 1238) are optimized, and at the same time, the high-crystalline region ratio on the temperature rising elution fractionation (TREF) graph is optimized, thereby providing a chlorinated polyethylene having excellent

processability and size stability during high-speed extrusion and improving tensile strength and plasticity of a CPE compound.

The polyethylene has $MI_5$ of 0.95 g/10min to 1.4 g/10min, which is a melt index measured in accordance with ASTM D 1238 at 190 °C under a load of 5 kg, as described above. The melt index $MI_5$ may be 1.4 g/10min or less in terms of securing excellent thermal stability, because the lower the $MI_5$, the higher the viscosity, and thus changes in the polyethylene particle shape is small in a high-temperature slurry state for chlorination. In a more preferred range, the melt index $MI_5$ may be 1.39 g/10min or less, or 1.38 g/10min or less, or 1.36 g/10min or less, or 1.35 g/10min or less, or 1.34 g/10min or less, or 1.32 g/10min or less, or 1.3 g/10min or less. Further, the melt index $MI_5$ may be 1.0 g/10min or more, or 1.05 g/10min or more, or 1.1 g/10min or more. In particular, it is desirable that the ethylene homopolymer has the above range of melt index $MI_5$, in terms of securing excellent extrusion processability and size stability even in a high-speed extrusion process when applied to electric wires or cables, and exhibiting excellent mechanical properties such as tensile strength.

Further, the ethylene homopolymer has a melt flow rate ratio ($MFRR_{21.6/5}$, a value obtained by dividing the melt index measured at 190 °C under a load of 21.6 kg by the melt index measured at 190 °C under a load of 5 kg in accordance with ASTM D 1238) of 18 to 22. Specifically, the melt flow rate ratio may be 18 to 21.5, or 18 to 21, or 18.5 to 21, or 19 to 21, or 19 to 20.5, or 19 to 20. The melt flow rate ratio should be 18 or more in terms of processability during extrusion, and 22 or less in terms of securing excellent mechanical properties by increasing Mooney viscosity (MV) of CPE.

The melt flow rate ratio ($MFRR_{21.6/5}$) is a value obtained by dividing the melt index measured at 190 °C under a load of 21.6 kg by the melt index measured at 190 °C under a load of 5 kg in accordance with ASTM D 1238. Here, the melt index $MI_{21.6}$ may be 20 g/10min to 30 g/10min, or 21g/10min to 28 g/10min, or 22 g/10min to 26 g/10min, as measured at 190 °C under a load of 21.6 kg in accordance with ASTM D 1238.

Further, the melt index $MI_{2.16}$ of ethylene homopolymer may be 0.01 g/10min to 0.45 g/10min, as measured at 190 °C under a load of 2.16 kg in accordance with ASTM D 1238. The melt index $MI_{2.16}$ may be 0.45 g/10min or less in terms of securing excellent thermal stability, as described above. In a more preferred range, the melt index $MI_{2.16}$ may be 0.44 g/10min or less, 0.43 g/10min or less, 0.42 g/10min or less, 0.41 g/10min or less, or 0.40 g/10min or less. Further, the melt index $MI_{2.16}$ may be 0.01 g/10min or more in terms of securing excellent processability, as described above. Specifically, the melt index $MI_{2.16}$ may be 0.02 g/10min or more, or 0.05 g/10min or more, or 0.1 g/10min or more, or 0.15 g/10min or more, or 0.18 g/10min or more, or 0.2 g/10min or more, or 0.22 g/10min or more, or 0.24 g/10min or more, or 0.26 g/10min or more, or 0.28 g/10min or more. In particular, it is desirable that the polyethylene has the above range of melt index $MI_{2.16}$, in terms of securing excellent extrusion processability and size stability even in a high-speed extrusion process when applied to electric wires or cables, and exhibiting excellent mechanical properties such as tensile strength.

Meanwhile, the ethylene homopolymer of the present disclosure is characterized by a low high-crystalline region ratio on the temperature rising elution fractionation (TREF) graph, together with the optimized melt index $MI_5$ and melt flow rate ratio ($MFRR_{21.6/5}$), as described above.

The ethylene homopolymer shows the low high-crystalline region ratio of 10% or less or 3% to 10% on the temperature rising elution fractionation (TREF) graph. Specifically, the high-crystalline region ratio may be 9.5% or less or 3% to 9.5%, or 9% or less or 3.5% to 9%, or 8.5% or less or 4% to 8.5%, or 8.0% or less or 5% to 8.0%, or 7.8% or less or 5.5% to 7.8%. Specifically, as the high-crystalline region ratio is lower, it is easier for chlorine molecules to penetrate into crystals, and thus the ratio should be 10% or less in terms of uniform chlorination reaction. However, when the high-crystalline region ratio is too low, the crystal arrangement may easily change, chlorination productivity may decrease, and strength may be poor. In terms of preventing these problems, the high-crystalline region ratio may be 3% or more.

The high-crystalline region ratio may be obtained from a temperature rising elution fractionation (TREF) graph for polyethylene, as shown in one embodiment of FIG. 1. First, the temperature rising elution fractionation (TREF) graph for polyethylene is obtained, and then an elution temperature of 105 °C on the TREF graph is considered as a reference for the high-crystalline region. The elution temperature of 105 °C as the reference is made into the vertical axis, and the region having the elution temperature or higher is called a high-crystalline region. From this, a graph area of the high-crystalline region having an elution temperature or higher corresponding to a minimum value is measured, and the high-crystalline region ratio (%) is a percentage value obtained by dividing the graph area by a total graph area.

In particular, the temperature rising elution fractionation (TREF) graph for polyethylene may be obtained using Agilent Technologies 7890A manufactured by Polymer Char. For example, a sample is dissolved in 20 mL of 1,2,4-trichlorobenzene at a concentration of 1.5 mg/mL, then dissolved by increasing the temperature at a rate of 40 °C/min from 30 °C to 150 °C, then recrystallized by lowering the temperature at a rate of 0.5 °C/min to 35 °C, and then eluted by increasing the temperature at a rate of 1 °C/min to 140 °C to obtain the graph.

The temperature rising elution fractionation (TREF) graph of polyethylene thus obtained has the elution temperature (°C) on the X axis, and the amount of elution (dW/dt) at the corresponding temperature on Y the axis, as illustrated in one embodiment of FIG. 1. The region occupied by the graph corresponding to a temperature equal to or higher than the elution temperature of 105 °C on the temperature rising elution fractionation (TREF) graph is called the high-crystalline region. That is, the elution temperature of 105 °C is made into the vertical axis, and a value obtained by

integrating an area of the graph having a temperature equal to or higher than the elution temperature may be referred to as an area of the high-crystalline region. A percentage value obtained by dividing the area of the high-crystalline region by a total graph area may be referred to as the high-crystalline region ratio.

Meanwhile, the ethylene homopolymer may have a density of 0.955 g/cm$^3$ to 0.960 g/cm$^3$, or 0.9565 g/cm$^3$ to 0.9595 g/cm$^3$, or 0.956 g/cm$^3$ to 0.959 g/cm$^3$. In particular, the polyethylene may have a density of 0.955 g/cm$^3$ or more, which means that the polyethylene has a high content of crystalline part and is dense, and the crystal structure of the polyethylene is difficult to change during chlorination. However, when the density of the polyethylene exceeds 0.960 g/cm$^3$, the content of crystalline structure of the polyethylene becomes too high, and as a result, the area of the high-crystalline region on TREF increases, and during CPE processing, the heat of fusion may increase and processability may decrease. Accordingly, it is desirable that the polyethylene of the present disclosure has the above range of density, in terms of securing excellent extrusion processability and size stability even in a high-speed extrusion process when applied to electric wires or cables, and exhibiting excellent mechanical properties such as tensile strength.

The ethylene homopolymer according to the present disclosure may have a molecular weight distribution of 2 to 10, or 4 to 10, or 5 to 9, or 6.5 to 8.2, or 7.0 to 8.0, or 7.2 to 7.6. In particular, since the polyethylene of the present disclosure has the above-described molecular weight distribution, CPE MV is 50 to 60 and a product with excellent processability may be obtained.

For example, the molecular weight distribution (MWD, polydispersity index) may be measured using gel permeation chromatography (GPC, manufactured by Water), and may be obtained by measuring a weight average molecular weight (Mw) and a number average molecular weight (Mn) of polyethylene, and then by dividing the weight average molecular weight by the number average molecular weight.

In particular, the weight average molecular weight (Mw) and the number average molecular weight (Mn) of ethylene homopolymer may be measured using a polystyrene calibration curve. For example, Waters PL-GPC220 may be used as the gel permeation chromatography (GPC) instrument, and a Polymer Laboratories PLgel MIX-B 300 mm length column may be used. In this regard, the measurement temperature may be 160 °C, and 1,2,4-trichlorobenzene may be used as a solvent, and a flow rate of 1 mL/min may be applied. The polyethylene sample may be pretreated by dissolving in 1,2,4-trichlorobenzene containing 0.0125% of BHT at 160 °C for 10 hours using a GPC analyzer (PL-GP220), and the sample was prepared at a concentration of 10 mg/10 mL, and then may be supplied in an amount of 200 microleters ($\mu$L). Mw and Mn values may be obtained using a calibration curve formed using polystyrene standards. 9 kinds of polystyrene standards are used, the polystyrene standards having a weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

The ethylene homopolymer may have a weight average molecular weight of 110000 g/mol to 250000 g/mol. Preferably, the ethylene homopolymer may have a weight average molecular weight of 120000 g/mol or more, or 125000 g/mol or more, or 130000 g/mol or more, or 135000 g/mol or more, or 140000 g/mol or more, or 145000 g/mol or more, or 147000 g/mol or more. Further, the polyethylene may have a weight average molecular weight of 220000 g/mol or less, or 200000 g/mol or less, or 180000 g/mol or less, or 170000 g/mol or less, or 160000 g/mol or less, or 155000 g/mol or less, or 153000 g/mol or less, which means a molecular weight suitable for obtaining CPE MV of 50 to 60 and excellent strength.

In particular, when the weight average molecular weight of the ethylene homopolymer is too low, chlorination productivity may deteriorate during a chlorination process. For this reason, the weight average molecular weight of the ethylene homopolymer may be 110000 g/mol or more. However, when the weight average molecular weight of polyethylene is too high, processability may deteriorate. For this reason, the weight average molecular weight of the ethylene homopolymer may be 250000 g/mol or less. Preferably, the ethylene homopolymer of the present disclosure has the above range of the weight average molecular weight in terms of achieving excellent chlorination productivity when applied to electric wires or cables, and balanced physical properties of MV, processability, tensile strength, and plasticity.

Meanwhile, according to another embodiment of the present disclosure, there is provided a process for preparing the above-described ethylene homopolymer.

The process for preparing the ethylene homopolymer according to the present disclosure comprises the step of polymerizing ethylene in the presence of at least one first metallocene compound represented by the following Chemical Formula 1; and at least one second metallocene compound selected from compounds represented by the following Chemical Formula 2, wherein a weight ratio of the first metallocene compound and the second metallocene compound may be 40:60 to 45:55:

[Chemical Formula 1]

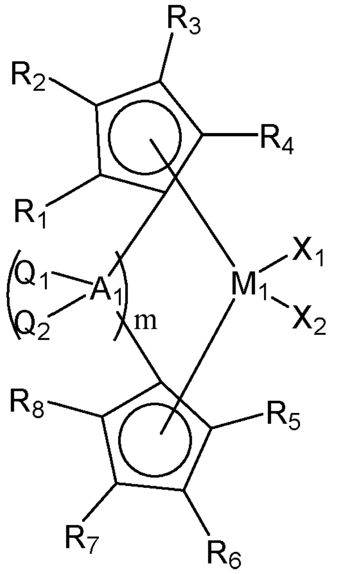

in Chemical Formula 1,

any one or more of $R_1$ to $R_8$ are $-(CH_2)_n-OR$, wherein R is $C_{1-6}$ linear or branched alkyl, and n is an integer of 2 to 6; the rest of $R_1$ to $R_8$ are the same as or different from each other, and are each independently a functional group selected from the group consisting of hydrogen, halogen, $C_{1-20}$ alkyl, $C_{2-20}$ alkenyl, $C_{6-20}$ aryl, $C_{7-40}$ alkylaryl, and $C_{7-40}$ arylalkyl; or two or more of the substituents that are adjacent to each other are connected with each other to form a $C_{6-20}$ aliphatic or aromatic ring unsubstituted or substituted with a $C_{1-10}$ hydrocarbyl group;
$Q_1$ and $Q_2$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl;
$A_1$ is carbon (C), silicon (Si), or germanium (Ge);
$M_1$ is a Group 4 transition metal;
$X_1$ and $X_2$ are the same as or different from each other, and are each independently halogen, $C_{1-20}$ alkyl, $C_{2-20}$ alkenyl, $C_{6-20}$ aryl, a nitro group, an amido group, $C_{1-20}$ alkylsilyl, $C_{1-20}$ alkoxy, or a $C_{1-20}$ sulfonate group; and
m is an integer of 0 or 1,

[Chemical Formula 2]

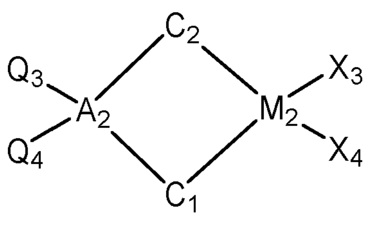

in Chemical Formula 2,
$Q_3$ and $Q_4$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl;
$A_2$ is carbon (C), silicon (Si), or germanium (Ge);
$M_2$ is a Group 4 transition metal;
$X_3$ and $X_4$ are the same as or different from each other, and are each independently halogen, $C_{1-20}$ alkyl, $C_{2-20}$ alkenyl, $C_{6-20}$ aryl, a nitro group, an amido group, $C_{1-20}$ alkylsilyl, $C_{1-20}$ alkoxy, or a $C_{1-20}$ sulfonate group; and
any one of $C_1$ and $C_2$ is represented by the following Chemical Formula 3a or 3b, and the other is represented by the following Chemical Formula 3c, 3d, or 3e;

[Chemical Formula 3a]

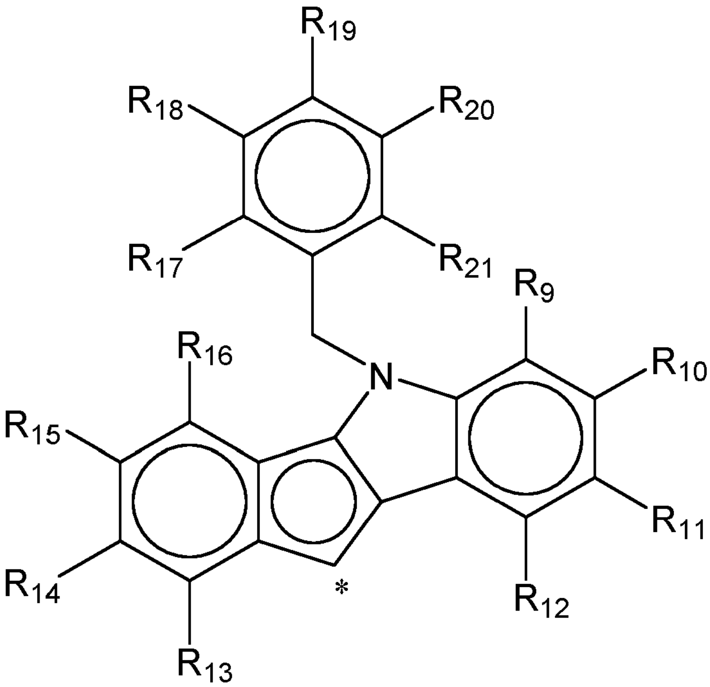

[Chemical Formula 3b]

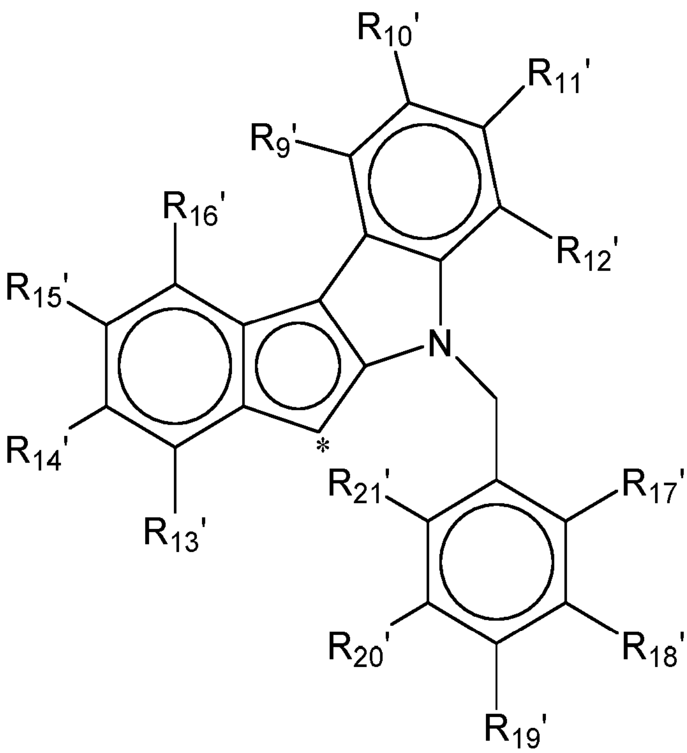

[Chemical Formula 3c]

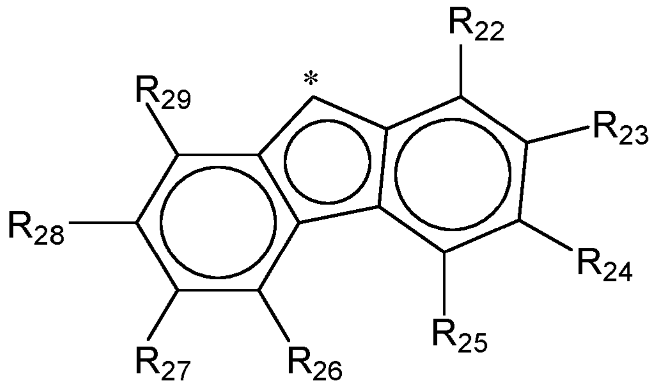

[Chemical Formula 3d]

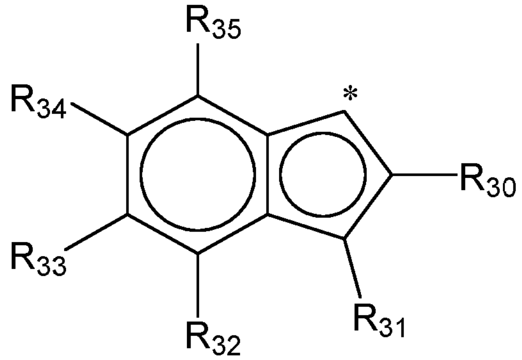

[Chemical Formula 3e]

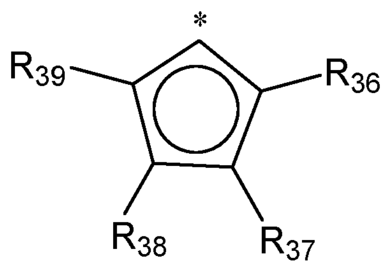

in Chemical Formulae 3a, 3b, 3c, 3d and 3e, $R_9$ to $R_{21}$ and $R_{9'}$ to $R_{21'}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, provided that one or more of $R_{17}$ to $R_{21}$ or one or more of $R_{17'}$ to $R_{21'}$ are $C_{1-20}$ haloalkyl;

$R_{22}$ to $R_{39}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, or two or more of $R_{22}$ to $R_{39}$ that are adjacent to each other may be connected with each other to form a $C_{6-20}$ aliphatic or aromatic ring unsubstituted or substituted with a $C_{1-10}$ hydrocarbyl group; and

* represents a site of binding to $A_2$ and $M_2$.

Unless otherwise specified herein, the following terms may be defined as follows.

The halogen may be fluorine (F), chlorine (Cl), bromine (Br) or iodine (I).

The hydrocarbyl group is a monovalent functional group in which a hydrogen atom is removed from hydrocarbon. The hydrocarbyl group may include an alkyl group, an alkenyl group, an alkynyl group, an aryl group, an aralkyl group, an

aralkenyl group, an aralkynyl group, an alkylaryl group, an alkenylaryl group, or an alkynylaryl group. In addition, the $C_{1-30}$ hydrocarbyl group may be a $C_{1-20}$ hydrocarbyl group or a $C_{1-10}$ hydrocarbyl group. For example, the hydrocarbyl group may be linear, branched, or cyclic alkyl. More specifically, the $C_{1-30}$ hydrocarbyl group may be a linear, branched, or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, or a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, or methylnaphthyl, or arylalkyl such as phenylmethyl, phenylethyl, biphenylmethyl, or naphthylmethyl. It may also be alkenyl such as allyl, ethenyl, propenyl, butenyl, or pentenyl

In addition, the $C_{1-20}$ alkyl may be linear, branched, or cyclic alkyl. Specifically, the $C_{1-20}$ alkyl may be $C_{1-20}$ linear alkyl; $C_{1-15}$ linear alkyl; $C_{1-5}$ linear alkyl; $C_{3-20}$ branched or cyclic alkyl; $C_{3-15}$ branched or cyclic alkyl; or $C_{3-10}$ branched or cyclic alkyl. For example, the $C_{1-20}$ alkyl may include methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, or cyclooctyl.

The $C_{2-20}$ alkenyl includes linear or branched alkenyl, and may specifically include allyl, ethenyl, propenyl, butenyl, or pentenyl.

The $C_{1-20}$ alkoxy may include methoxy, ethoxy, isopropoxy, n-butoxy, tert-butoxy, or cyclohexyloxy.

The $C_{2-20}$ alkoxyalkyl group is a functional group in which one or more hydrogens of the above-mentioned alkyl are substituted with alkoxy. Specifically, the $C_{2-20}$ alkoxyalkyl group may include methoxymethyl, methoxyethyl, ethoxymethyl, isopropoxymethyl, iso-propoxyethyl, iso-propoxypropyl, iso-propoxyhexyl, tert-butoxymethyl, tert-butoxyethyl, tert-butoxypropyl, or tert-butoxyhexyl.

The $C_{6-40}$ aryloxy may include phenoxy, biphenoxyl, or naphthoxy.

The $C_{7-40}$ aryloxyalkyl group is a functional group in which one or more hydrogens of the above-mentioned alkyl are substituted with aryloxy. Specifically, the $C_{7-40}$ aryloxyalkyl group may include phenoxymethyl, phenoxyethyl, or phenoxyhexyl.

The $C_{1-20}$ alkylsilyl or the $C_{1-20}$ alkoxysilyl is a functional group in which 1 to 3 hydrogens of $-SiH_3$ are substituted with 1 to 3 alkyl groups or alkoxy groups described above. Specifically, it may include alkylsilyl such as methylsilyl, dimethylsilyl, trimethylsilyl, dimethylethylsilyl, diethylmethylsilyl, or dimethylpropylsilyl; alkoxysilyl such as methoxysilyl, dimethoxysilyl, trimethoxysilyl, or dimethoxyethoxysilyl; or alkoxyalkylsilyl such as methoxydimethylsilyl, diethoxymethylsilyl, or dimethoxypropylsilyl.

The $C_{1-20}$ silylalkyl is a functional group in which one or more hydrogens of the above-mentioned alkyl are substituted with silyl. Specifically, the $C_{1-20}$ silylalkyl may include $-CH_2-SiH_3$, methylsilylmethyl, or dimethylethoxysilylpropyl.

In addition, the $C_{1-20}$ alkylene is the same as the above-mentioned alkyl except that it is a divalent substituent. Specifically, the $C_{1-20}$ alkylene include methylene, ethylene, propylene, butylene, pentylene, hexylene, heptylene, octylene, cyclopropylene, cyclobutylene, cyclopentylene, cyclohexylene, cycloheptylene, or cyclooctylene.

The $C_{6-20}$ aryl may be a monocyclic, bicyclic or tricyclic aromatic hydrocarbon. For example, the $C_{6-20}$ aryl may include phenyl, biphenyl, naphthyl, anthracenyl, phenanthrenyl, or fluorenyl.

The $C_{7-20}$ alkylaryl may refer to a substituent in which one or more hydrogens of the aromatic ring are substituted with the above-mentioned alkyl. For example, the $C_{7-20}$ alkylaryl may include methylphenyl, ethylphenyl, methylbiphenyl, or methylnaphthyl.

The $C_{7-20}$ arylalkyl may refer to a substituent in which one or more hydrogens of the alkyl are substituted with the above-mentioned aryl. For example, the $C_{7-20}$ arylalkyl may include phenylmethyl, phenylethyl, biphenylmethyl, or naphthylmethyl.

In addition, the $C_{6-20}$ arylene is the same as the above-mentioned aryl except that it is a divalent substituent. Specifically, the $C_{6-20}$ arylene may include phenylene, biphenylene, naphthylene, anthracenylene, phenanthrenylene, or fluorenylene.

The Group 4 transition metal may be titanium (Ti), zirconium (Zr), hafnium (Hf), or rutherfordium (Rf). Specifically, the Group 4 transition metal may be titanium (Ti), zirconium (Zr), or hafnium (Hf). More specifically, it may be zirconium (Zr), or hafnium (Hf), but is not limited thereto.

Further, the Group 13 element may be boron (B), aluminum (A1), gallium (Ga), indium (In), or thallium (Tl). Specifically, the Group 13 element may be boron (B) or aluminum (Al), but is not limited thereto.

Meanwhile, the first metallocene compound may be represented by any one of the following Chemical Formulae 1-1 to 1-4:

[Chemical Formula 1-1]

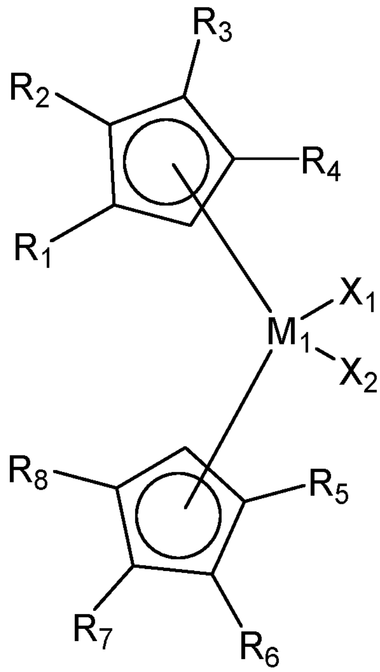

[Chemical Formula 1-2]

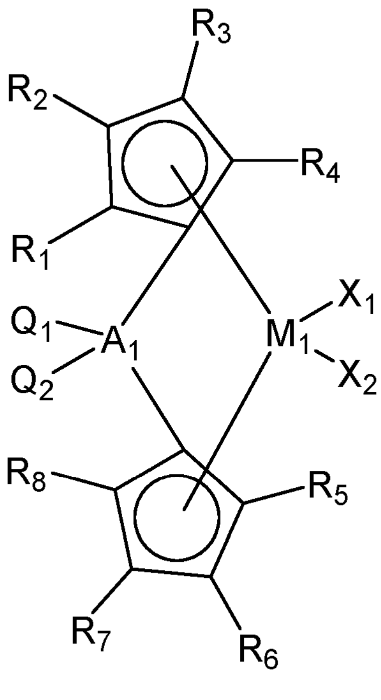

[Chemical Formula 1-3]

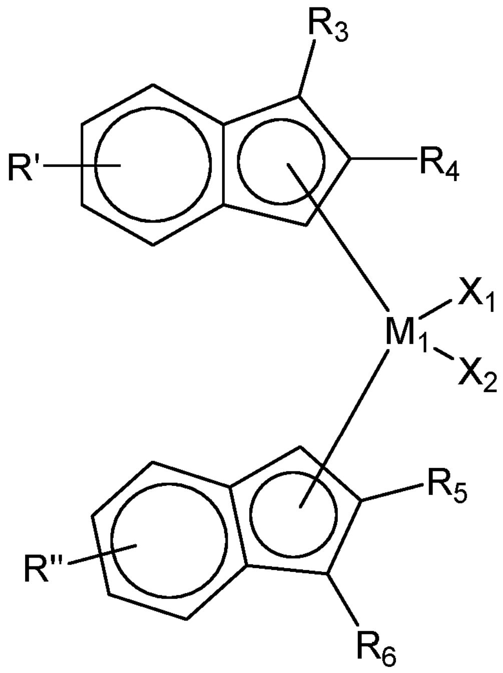

[Chemical Formula 1-4]

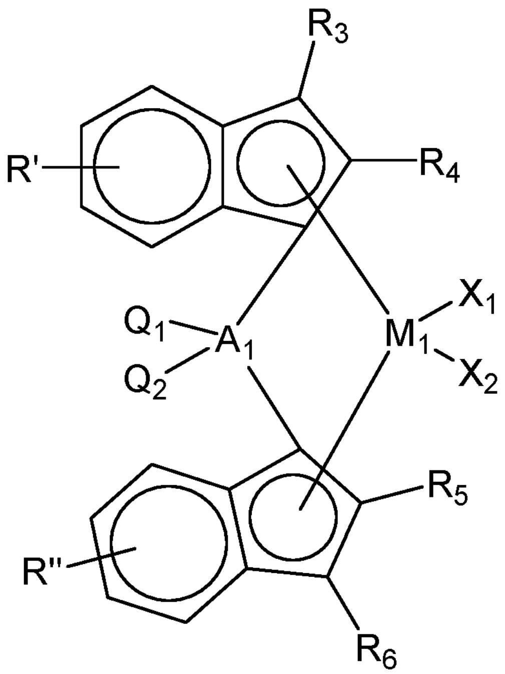

in Chemical Formulae 1-1 to 1-4, $Q_1$, $Q_2$, $A_1$, $M_1$, $X_1$, $X_2$, and $R_1$ to $R_8$ are the same as defined in Chemical Formula 1, and R' and R" are the same as or different from each other, and are each independently a $C_{1-10}$ hydrocarbyl group.

Preferably, the first metallocene compound may have a structure including a bis-cyclopentadienyl ligand, and more preferably, including cyclopentadienyl ligands configured symmetrically with respect to a transition metal. More preferably, the first metallocene compound may be represented by Chemical Formula 1-1.

In Chemical Formula 1 and Chemical Formulae 1-1 to 1-4, any one or more of $R_1$ to $R_8$ may be $-(CH_2)_n-OR$, wherein R is $C_{1-6}$ linear or branched alkyl, and n is an integer of 2 to 6. Specifically, R is $C_{1-4}$ linear or branched alkyl, and n is an integer of 4 to 6. For example, any one or more of $R_1$ to $R_8$ may be $C_{2-6}$ alkyl substituted with $C_{1-6}$ alkoxy, or $C_{4-6}$ alkyl substituted with $C_{1-4}$ alkoxy.

In Chemical Formula 1 and Chemical Formulae 1-1 to 1-4, the rest of $R_1$ to $R_8$ may be the same as or different from

each other, and may be each independently a functional group selected from the group consisting of hydrogen, halogen, $C_{1-20}$ alkyl, $C_{2-20}$ alkenyl, $C_{6-20}$ aryl, $C_{7-40}$ alkylaryl, and $C_{7-40}$ arylalkyl; or two or more of the substituents that are adjacent to each other may be connected with each other to form a $C_{6-20}$ aliphatic or aromatic ring unsubstituted or substituted with a $C_{1-10}$ hydrocarbyl group.

Specifically, the rest of $R_1$ to $R_8$ may be each hydrogen, or $C_{1-20}$ alkyl, or $C_{1-10}$ alkyl, or $C_{1-6}$ alkyl, or $C_{2-6}$ alkyl substituted with $C_{1-6}$ alkoxy, or $C_{4-6}$ alkyl substituted with $C_{1-4}$ alkoxy. Alternatively, two or more of $R_1$ to $R_8$ that are adjacent to each other may be connected with each other to form a $C_{6-20}$ aliphatic or aromatic ring substituted with $C_{1-3}$ hydrocarbyl group.

Preferably, in Chemical Formula 1 and Chemical Formulae 1-1 to 1-4, $R_3$ and $R_6$ may be each $C_{1-6}$ alkyl, or $C_{2-6}$ alkyl substituted with $C_{1-6}$ alkoxy, provided that one or more of $R_3$ and $R_6$ are $C_{2-6}$ alkyl substituted with $C_{1-6}$ alkoxy. Alternatively, $R_3$ and $R_6$ may be each $C_{4-6}$ alkyl, or $C_{4-6}$ alkyl substituted with $C_{1-4}$ alkoxy, provided that one or more of $R_3$ and $R_6$ are $C_{4-6}$ alkyl substituted with $C_{1-4}$ alkoxy. For example, $R_3$ and $R_6$ may be each n-butyl, n-pentyl, n-hexyl, tert-butoxy butyl, or tert-butoxy hexyl, provided that one or more of $R_3$ and $R_6$ are tert-butoxy butyl or tert-butoxy hexyl. Preferably, $R_3$ and $R_6$ may be the same as each other and may be tert-butoxy butyl or tert-butoxy hexyl.

In addition, in Chemical Formula 1 and Chemical Formulae 1-1 to 1-4, $R_1$, $R_2$, $R_4$, $R_5$, $R_7$, and $R_8$ may be hydrogen.

In Chemical Formula 1, Chemical Formula 1-2, and Chemical Formula 1-4, $Q_1$ and $Q_2$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl.

Specifically, $Q_1$ and $Q_2$ may be each $C_{1-12}$ alkyl, or $C_{1-6}$ alkyl, or $C_{1-3}$ alkyl. Preferably, $Q_1$ and $Q_2$ may be the same as each other and may be $C_{1-3}$ alkyl. More preferably, $Q_1$ and $Q_2$ may be methyl.

In Chemical Formula 1 and Chemical Formulae 1-1 to 1-4, $A_1$ may be carbon (C), silicon (Si), or germanium (Ge). Specifically, $A_1$ may be silicon (Si).

In Chemical Formula 1 and Chemical Formulae 1-1 to 1-4, $M_1$ is a Group 4 transition metal. Specifically, $M_1$ may be zirconium (Zr) or hafnium (Hf), and preferably zirconium (Zr).

In Chemical Formula 1 and Chemical Formulae 1-1 to 1-4, $X_1$ and $X_2$ are the same as or different from each other, and are each independently halogen, $C_{1-20}$ alkyl, $C_{2-20}$ alkenyl, $C_{6-20}$ aryl, a nitro group, an amido group, $C_{1-20}$ alkylsilyl, $C_{1-20}$ alkoxy, or a $C_{1-20}$ sulfonate group. Specifically, $X_1$ and $X_2$ may be each halogen, and may be each chloro, iodine, or bromine. Preferably, $X_1$ and $X_2$ may be chloro.

In Chemical Formula 1, m is an integer of 0 or 1, and preferably m is 0.

The compound represented by Chemical Formula 1 may be, for example, a compound represented by any one of the following structural formulae, but is not limited thereto:

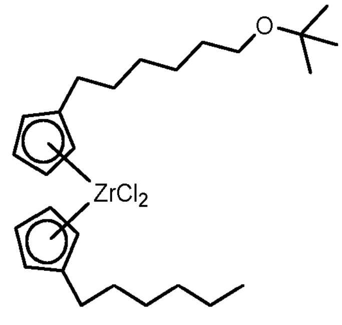

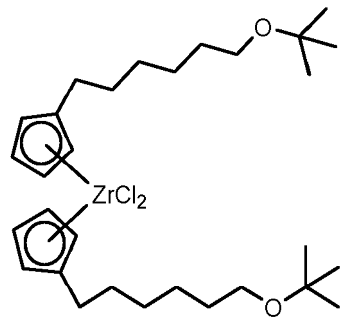

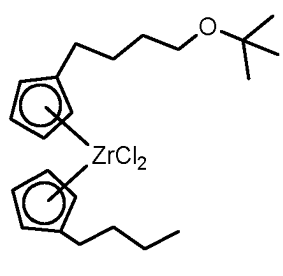

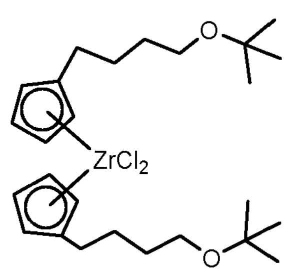

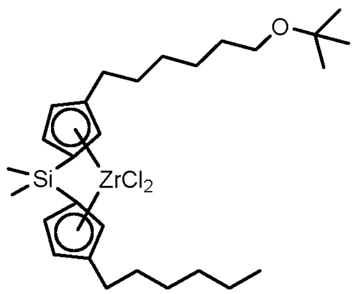

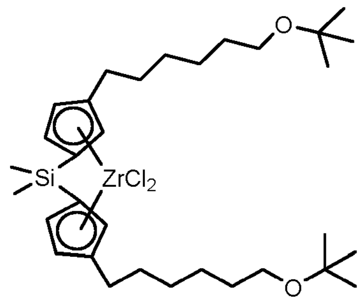

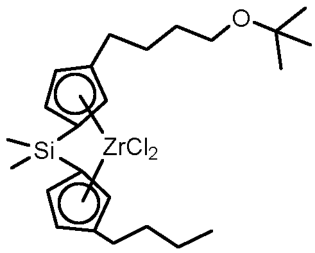

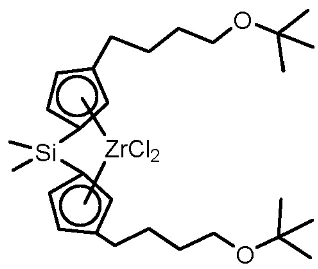

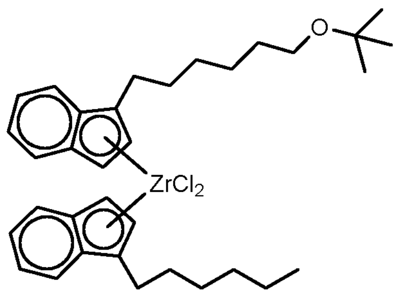

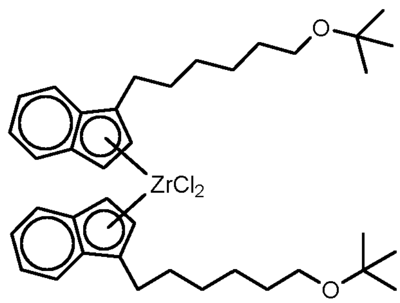

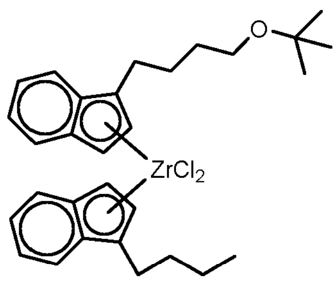

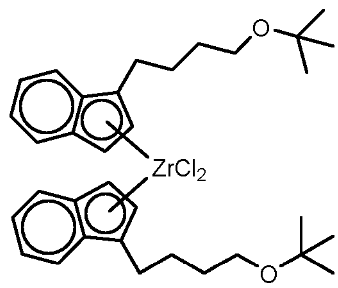

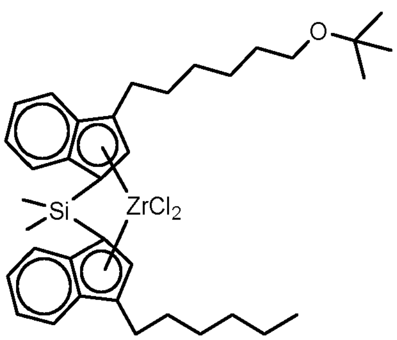

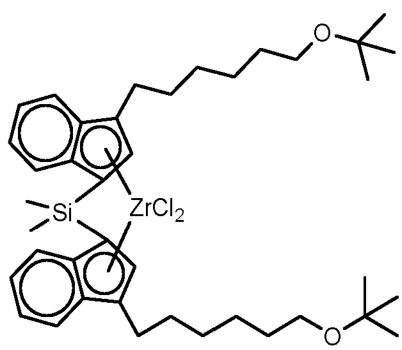

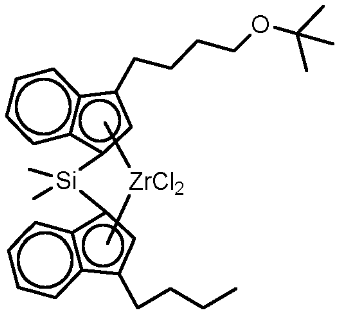
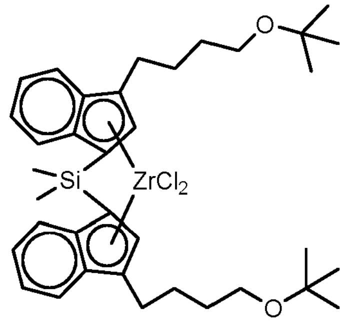
.

Preferably, the first metallocene compound may be a compound represented by any one of the following structural formulae:

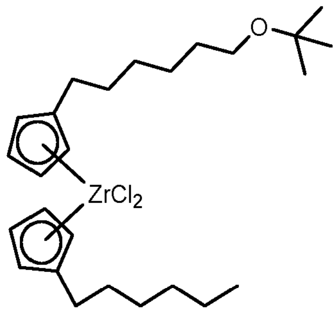
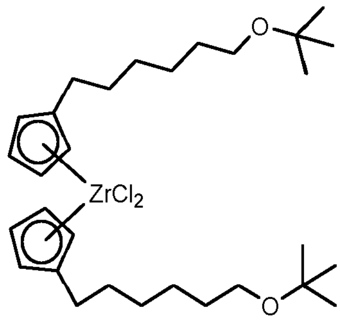
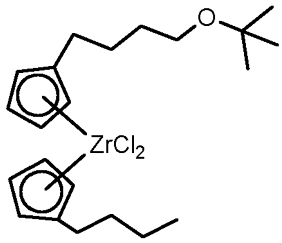
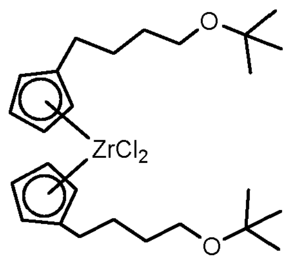
.

More preferably, the first metallocene compound may be a compound represented by any one of the following structural formulae:

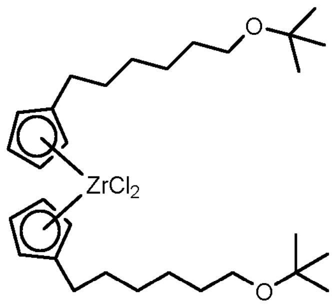
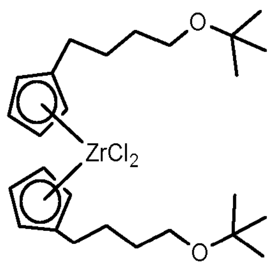
.

The first metallocene compound represented by the above structural formula may be synthesized by applying known reactions, and a detailed synthesis method may be referred to Examples.

In the process for preparing the polyethylene according to the present disclosure, one or more kinds of the first metallocene compound represented by Chemical Formula 1, or Chemical Formula 1-1, 1-2, 1-3, or 1-4 as described above are used together with one or more kinds of the second metallocene compound described below. Thus, it is possible to improve productivity, and tensile strength and plasticity of a CPE compound while achieving excellent extrusion processability and size stability even during high-speed extrusion in the CPE process described below by optimizing

the melt index $MI_5$ and the melt flow rate ratio ($MFRR_{21.6/5}$) of polyethylene, and at the same time, by optimizing the high-crystalline region ratio according to temperature rising elution fractionation (TREF) analysis.

Meanwhile, the second metallocene compound may be represented by the following Chemical Formula 2-1:

[Chemical Formula 2-1]

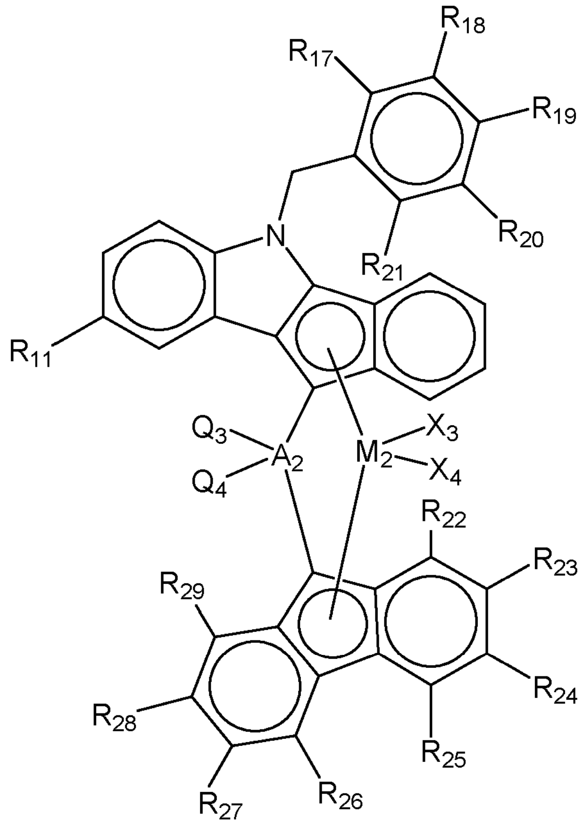

in Chemical Formula 2-1, $Q_3$, $Q_4$, $A_2$, $M_2$, $X_3$, $X_{24}$, $R_{11}$, and $R_{17}$ to $R_{29}$ are the same as defined in Chemical Formula 2.

In Chemical Formulae 2 and 2-1, $Q_3$ and $Q_4$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl. Specifically, $Q_3$ and $Q_4$ may be each $C_{1-12}$ alkyl, or $C_{1-8}$ alkyl, or $C_{1-3}$ alkyl, or $C_{2-18}$ alkoxyalkyl, or $C_{2-14}$ alkoxyalkyl, or $C_{2-12}$ alkoxyalkyl, and more specifically, $Q_3$ and $Q_4$ may be each $C_{1-3}$ alkyl or $C_{2-12}$ alkoxyalkyl. Preferably, $Q_3$ and $Q_4$ may be different from each other, and one of $Q_3$ and $Q_4$ may be $C_{1-3}$ alkyl, and the other may be $C_{2-12}$ alkoxyalkyl. More preferably, one of $Q_3$ and $Q_4$ may be methyl, and the other may be tert-butoxyhexyl.

In Chemical Formulae 2 and 2-1, $A_2$ may be carbon (C), silicon (Si), or germanium (Ge). Specifically, $A_2$ may be silicon (Si).

In Chemical Formulae 2 and 2-1, $M_2$ is a Group 4 transition metal. Specifically, $M_2$ may be zirconium (Zr) or hafnium (Hf), and preferably, zirconium (Zr).

In Chemical Formulae 2 and 2-1, $X_3$ and $X_4$ are the same as or different from each other, and are each independently halogen, $C_{1-20}$ alkyl, $C_{2-20}$ alkenyl, $C_{6-20}$ aryl, a nitro group, an amido group, $C_{1-20}$ alkylsilyl, $C_{1-20}$ alkoxy, or a $C_{1-20}$ sulfonate group. Specifically, $X_3$ and $X_4$ may be each halogen, and may be each chloro, iodine, or bromine. Preferably, $X_3$ and $X_4$ may be chloro.

In Chemical Formula 2, one of $C_1$ and $C_2$ may be represented by Chemical Formula 3a or Chemical Formula 3b, and the other of $C_1$ and $C_2$ may be represented by Chemical Formula 3c, Chemical Formula 3d, or Chemical Formula 3e, and preferably, represented by Chemical Formula 3c.

In Chemical Formulae 2 and 2-1, $R_9$ to $R_{21}$ and $R_{9'}$ to $R_{21'}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, provided that one or more of $R_{17}$ to $R_{21}$ or one or more of $R_{17'}$ to $R_{21'}$ are $C_{1-20}$ haloalkyl.

Specifically, in Chemical Formula 2, $R_9$ to $R_{10}$ and $R_{12}$ to $R_{16}$ and $R_{9'}$ to $R_{10'}$ and $R_{12'}$ to $R_{16'}$ may be hydrogen.

In Chemical Formulae 2 and 2-1, $R_{11}$ and $R_{11'}$ may be each $C_{1-6}$ linear or branched alkyl, or $C_{1-3}$ linear or

branched alkyl, and preferably, may be methyl.

Specifically, in Chemical Formulae 2 and 2-1, $R_{17}$ to $R_{21}$ or $R_{17'}$ to $R_{21'}$ may be each hydrogen or $C_{1-6}$ haloalkyl, provided that one or more of $R_{17}$ to $R_{21}$ or one or more of $R_{17'}$ to $R_{21'}$ are $C_{1-6}$ haloalkyl. Alternatively, $R_{17}$ to $R_{21}$ or $R_{17'}$ to $R_{21'}$ may be each hydrogen or $C_{1-3}$ haloalkyl, provided that one or more of $R_{17}$ to $R_{21}$ or one or more of $R_{17'}$ to $R_{21'}$ are $C_{1-3}$ haloalkyl. For example, $R_{17}$ to $R_{20}$ or $R_{17'}$ to $R_{20'}$ are hydrogen, and $R_{21}$ or $R_{21'}$ is trihalomethyl, and preferably, trifluoromethyl.

In Chemical Formulae 2 and 2-1, $R_{22}$ to $R_{39}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, or two or more of $R_{22}$ to $R_{39}$ that are adjacent to each other may be connected with each other to form a $C_{6-20}$ aliphatic or aromatic ring unsubstituted or substituted with a $C_{1-10}$ hydrocarbyl group.

Specifically, $R_{22}$ to $R_{29}$ may be each hydrogen, or $C_{1-20}$ alkyl, or $C_{1-10}$ alkyl, or $C_{1-6}$ alkyl, or $C_{1-3}$ alkyl. Alternatively, two or more of $R_{22}$ to $R_{29}$ that are adjacent to each other may be connected with each other to form a $C_{6-20}$ aliphatic or aromatic ring substituted with $C_{1-3}$ hydrocarbyl group. Preferably, $R_{22}$ to $R_{29}$ may be hydrogen.

Specifically, in Chemical Formulae 2 and 2-1, $R_{30}$ to $R_{35}$ may be each hydrogen, or $C_{1-20}$ alkyl, or $C_{1-10}$ alkyl, or $C_{1-6}$ alkyl, or $C_{1-3}$ alkyl.

In Chemical Formulae 2 and 2-1, $R_{26}$ to $R_{29}$ may be each hydrogen, or $C_{1-20}$ alkyl, or $C_{1-10}$ alkyl, or $C_{1-6}$ alkyl, or $C_{1-3}$ alkyl.

The compound represented by Chemical Formula 2 may be, for example, a compound represented by the following structural formula:

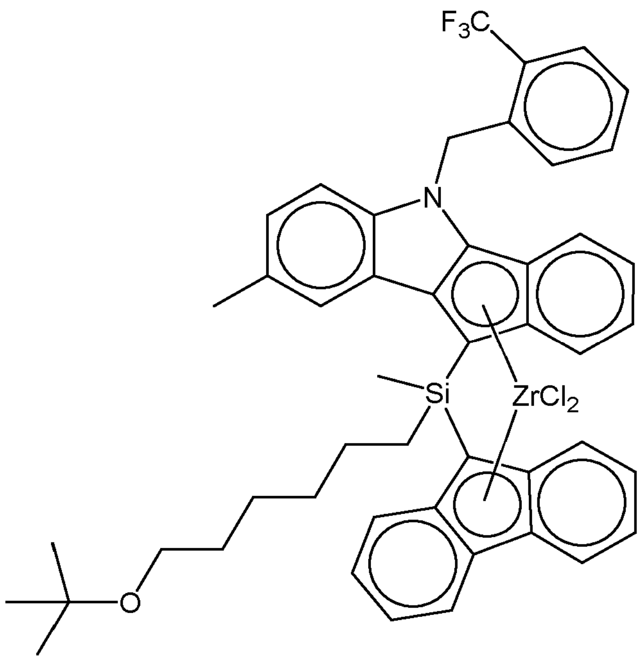

The second metallocene compound represented by the above structural formula may be synthesized by applying known reactions, and a detailed synthesis method may be referred to Examples.

A process for preparing the metallocene compound is described in detail in Examples to be described later.

The metallocene catalyst used in the present disclosure may be supported on a support together with a cocatalyst compound.

In the supported metallocene catalyst according to the present disclosure, the cocatalyst supported on a support for activating the metallocene compound is an organometallic compound containing a Group 13 metal, and is not particularly limited as long as it may be used in the polymerization of olefins in the presence of a general metallocene catalyst.

The cocatalyst is an organometallic compound containing a Group 13 metal, and is not particularly limited as long as it may be used in the polymerization of ethylene in the presence of a general metallocene catalyst.

Specifically, the cocatalyst may be one or more selected from the group consisting of compounds represented by the following Chemical Formulae 4 to 6:

[Chemical Formula 4] $-[Al(R_{40})-O]_c-$

in Chemical Formula 4,

$R_{40}$ is each independently halogen, $C_{1-20}$ alkyl, or $C_{1-20}$ haloalkyl,
c is an integer of 2 or more,

[Chemical Formula 5] $D(R_{41})_3$

in Chemical Formula 5,

D is aluminum or boron, and
$R_{41}$'s are each independently hydrogen, halogen, $C_{1-20}$ hydrocarbyl or $C_{1-20}$ hydrocarbyl substituted with halogen,

[Chemical Formula 6] $[L-H]^+[Q(E)_4]^-$ or $[L]^+[Q(E)_4]^-$

in Chemical Formula 6,

L is a neutral or cationic Lewis base,
$[L-H]^+$ is a bronsted acid,
Q is $B^{3+}$ or $Al^{3+}$, and
E's are each independently $C_{6-20}$ aryl or $C_{1-20}$ alkyl, wherein $C_{6-20}$ aryl or $C_{1-20}$ alkyl is unsubstituted or substituted with one or more substituents selected from the group consisting of halogen, $C_{1-20}$ alkyl, $C_{1-20}$ alkoxy, and phenoxy.

The compound represented by Chemical Formula 4 may be, for example, alkylaluminoxane such as modified methyl aluminoxane (MMAO), methyl aluminoxane (MAO), ethylaluminoxane, isobutylaluminoxane, or butylaluminoxane.

The alkyl metal compound represented by Chemical Formula 5 may be, for example, trimethylaluminum, triethylaluminum, triisobutylaluminum, tripropylaluminum, tributylaluminum, dimethylchloroaluminum, dimethylisobutylaluminum, dimethylethylaluminum, diethylchloroaluminum, triisopropylaluminum, tri-t-butylaluminum, tricyclopentylaluminum, tripentylaluminum, triisopentylaluminum, trihexylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, or tributylboron.

The compound represented by Chemical Formula 6 may be, for example, triethylammoniumtetraphenylboron, tributylammoniumtetraphenylboron, trimethylammoniumtetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenyl boron, N,N-dimethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tributylammoniumtetra(p-trifluoromethylphenyl)aluminum, trimethylammoniumtetra(p-trifluoromethylphenyl)aluminum,tributylammoniumtetrapentafluorophenylaluminum, N,N-diethylaniliniumtetraphenylaluminum, N,N-dimethylaniliniumtetraphenylaluminum, N,N-diethylaniliniumtetrapentafluorophenylaluminum, diethylammoniumtetrapentafluorophenylaluminum, triphenylphosphoniumtetraphenylaluminum, trimethylphosphoniumtetraphenylaluminum, triphenylcarboniumtetraphenylboron, triphenylcarboniumtetraphenylaluminum, triphenylcarboniumtetra(p-trifluoromethylphenyl)boron, or triphenylcarboniumtetrapentafluorophenylboron.

The cocatalyst may be supported in an amount of 5 mmol to 20 mmol, based on 1 g of the support.

In the supported metallocene catalyst according to the present disclosure, a support containing hydroxyl groups on the surface may be used as the support. Preferably, a support containing highly reactive hydroxyl groups and siloxane groups which is dried to remove moisture on the surface may be used.

For example, silica, silica-alumina, or silica-magnesia dried at a high temperature may be used, and may commonly include oxide, carbonate, sulfate, and nitrate, such as $Na_2O$, $K_2CO_3$, $BaSO_4$, or $Mg(NO_3)_2$.

A drying temperature of the support may be preferably 200 °C to 800 °C, more preferably 300 °C to 600 °C, and most preferably, 300 °C to 400 °C. When the drying temperature of the support is lower than 200 °C, surface moisture may react with the cocatalyst due to excessive moisture. When it is higher than 800 °C, pores on the surface of the support may

be combined to reduce the surface area, and a lot of hydroxyl groups may be lost on the surface and only siloxane groups may remain, thus decreasing the reaction sites with the cocatalyst, which is not preferable.

The amount of the hydroxyl groups on the surface of the support may be preferably 0.1 mmol/g to 10 mmol/g, and more preferably 0.5 mmol/g to 5 mmol/g. The amount of the hydroxyl groups on the surface of the support may be controlled by the preparation method and conditions of the support, or drying conditions, for example, temperature, time, vacuum, or spray drying.

When the amount of the hydroxyl groups is less than 0.1 mmol/g, the reaction sites with the cocatalyst may be little, and when it is more than 10 mmol/g, there is a possibility of being derived from moisture other than hydroxyl groups on the surface of the support particle, which is not preferable.

In the supported metallocene catalyst of the present disclosure, a weight ratio of the total transition metal included in the metallocene catalyst to the support may be 1:10 to 1:1000. When the support and the metallocene compounds are included within the above weight ratio, an optimal shape may be exhibited. In addition, a weight ratio of the cocatalyst compound to the support may be 1:1 to 1:100.

The ethylene polymerization reaction may be carried out using a single continuous slurry polymerization reactor, loop slurry reactor, gas phase reactor, or solution reactor.

In particular, the polyethylene according to the present disclosure may be prepared by homopolymerizing ethylene in the presence one or more kinds of the first metallocene compound represented by Chemical Formula 1; and one or more kinds of the second metallocene compound selected from the compounds represented by Chemical Formula 2.

A weight ratio of the first metallocene compound and the second metallocene compound may be, for example, 40:60 to 45:55. Specifically, the weight ratio of the first and second metallocene compounds may be 41:59 to 44:56, or 42:58 to 43:57. The weight ratio of the catalyst precursor may be within the above range in terms of optimizing a high-crystalline region in a molecular structure in order to prepare a chlorinated polyethylene and a CPE compound having high extrusion processability and excellent size stability even during high-speed extrusion in a process of manufacturing electric wires or cables by optimizing the high-crystalline region in the molecular structure. Specifically, the weight ratio may be 40:60 or more in terms of securing MFRR(21.6/5) of 18 or more and may be 45:55 or less in terms of optimizing MFRR(21.6/5) of 22 or less, when the high-crystalline region ratio of polyethylene is 10% or less and the melt index $MI_5$ is 0.8 g/10min to 1.4 g/10min.

Further, in the present disclosure, the polyethylene may be prepared under the metallocene catalyst as described above while introducing hydrogen gas. In this regard, the hydrogen gas may be introduced in an amount of 100 ppm to 150 ppm, or 110 ppm to 140 ppm, or 115 ppm to 135 ppm, or 120 ppm to 130 ppm. The input amount of hydrogen gas may be maintained within the above range, in terms of maintaining the optimal range of the melt index $MI_5$ and the melt flow rate ratio of the polyethylene obtained after polymerization while minimizing the high-crystalline region in the molecule. In particular, the hydrogen gas may be preferably introduced in an amount of 115 ppm or more or 120 ppm or more in terms of decreasing hardness by reducing residual crystals of CPE under the same chlorination conditions and improving processability (comp'd MV) and size stability (plasticity) due to excellent dispersity in the CPE compound.

Meanwhile, when the hydrogen gas is introduced in an amount of more than 150 ppm, a wax content in a polymerization reaction solvent, e.g., hexane is increased. Thus, there may be a problem in that a particle aggregation phenomenon may occur during the chlorination reaction. Further, the wax content may be maintained at 20% or less in the polymerization process of the present disclosure, and the hydrogen input may be controlled. The wax content may be measured by separating the polymerization product using a centrifugal separator, sampling 100 mL of the remaining hexane solvent, settling for 2 hours, and determining a volume ratio occupied by the wax.

Further, the polymerization temperature may be 25 °C to 500 °C, preferably 25 °C to 200 °C, and more preferably 50 °C to 150 °C. Further, the polymerization pressure may be 1 $kgf/cm^2$ to 100 $kgf/cm^2$, preferably 1 $kgf/cm^2$ to 50 $kgf/cm^2$, and more preferably 5 $kgf/cm^2$ to 30 $kgf/cm^2$.

The supported metallocene catalyst may be injected after being dissolved or diluted in a $C_5$ to $C_{12}$ aliphatic hydrocarbon solvent, such as pentane, hexane, heptane, nonane, decane and an isomer thereof, or in an aromatic hydrocarbon solvent, such as toluene and benzene, or in a hydrocarbon solvent substituted with chlorine, such as dichloromethane and chlorobenzene. The solvent used herein is preferably used after removing a small amount of water or air, which acts as a catalyst poison, by treating with a small amount of alkyl aluminum. It is also possible to further use the cocatalyst.

Meanwhile, according to still another embodiment of the present disclosure, provided is a chlorinated polyethylene (CPE) prepared using the above-described polyethylene.

The chlorinated polyethylene according to the present disclosure may be prepared by polymerizing ethylene in the presence of the supported metallocene catalyst described above, and then reacting the polyethylene with chlorine.

The reaction with chlorine may be carried out by dispersing the prepared polyethylene with water, an emulsifier and a dispersant, and then adding a catalyst and chlorine thereto.

The emulsifier may be polyether or polyalkylene oxide. The dispersant may be a polymer salt or an organic acid

polymer salt, and the organic acid may be methacrylic acid or acrylic acid.

The catalyst may be a chlorination catalyst used in the art, and for example, benzoyl peroxide may be used. The chlorine may be used alone, or may be used in a mixture with an inert gas.

The chlorination reaction may be preferably performed at 60 °C to 150 °C, or 70 °C to 145 °C, or 80 °C to 140 °C and the reaction time may be preferably 10 minutes to 10 hours, 1 hour to 9 hours, or 2 hours to 8 hours.

The chlorinated polyethylene prepared by the above reaction may be further subjected to a neutralization process, a washing process, and/or a drying process, and thus may be obtained in a powder form.

Meanwhile, the chlorinated polyethylene according to the present disclosure may have low hardness and heat of fusion together with a specific Mooney viscosity by optimizing all of the melt index $MI_5$ and the melt flow rate ratio $MFRR_{21.6/5}$ of polyethylene and the high-crystalline region in the molecular structure as described above, and therefore, during processing of a CPE compound to be applied to electric wires and cables, MV, processability, tensile strength, and plasticity as well as chlorination productivity in the chlorination process may be all improved in the excellent degree.

In particular, the chlorinated polyethylene exhibits excellent chlorine distribution uniformity in the chlorinated polyethylene due to the narrow molecular weight distribution of polyethylene. For example, the chlorinated polyethylene may have Mooney viscosity (MV) of 50 or more to 60 or less, as measured under condition of 121 °C after preparing the chlorinated polyethylene by reacting the polyethylene with chlorine in a slurry (water or aqueous HCl solution) at 60 °C to 150 °C. Specifically, the chlorinated polyethylene may have Mooney viscosity (MV) of 50.5 or more, or 51 or more, or 51.5 or more, or 52 or more, and 59 or less, or 58 or less, or 57 or less, or 56 or less, or 55 or less, or 54 or less. In particular, the chlorinated polyethylene may have Mooney viscosity in the above-described range in terms of being mainly applied to thin electric wires and securing size stability during high-speed extrusion. Further, when the Mooney viscosity of the chlorinated polyethylene is too high, the surface of CPE compound processed for use in wires and cables by compounding with inorganic additives and cross-linking agents as described later may not be smooth and may be rough, and the gloss may be poor, resulting in a poor appearance.

In addition, the chlorinated polyethylene may have a tensile strength of 12 MPa or more, or 12 MPa to 30 MPa, or 12.5 MPa or more, or 12.3 MPa to 20 MPa, or 12.5 MPa or more, or 12.5 MPa to 15 MPa, as measured in accordance with ASTM D 412. The chlorinated polyethylene may have a tensile elongation of 500% or more or 500% to 2000%, or 700% or more or 700% to 1500%, or 900% or more or 900% to 1200%, as measured in accordance with ASTM D 412.

Specifically, the Mooney viscosity (MV), tensile strength and tensile elongation may be values measured for the chlorinated polyethylene obtained by heating 500 kg to 600 kg of polyethylene in a slurry (water or aqueous HCl solution) state from 75 °C to 85 °C to a final temperature of 120 °C to 140 °C at a rate of 15 °C/hr to 18.5 °C/hr, and then performing a chlorination reaction with gaseous chlorine at a final temperature of 120 °C to 140 °C for 2 hours to 5 hours. At this time, the chlorination reaction may be carried out by injecting the gaseous chlorine while raising the temperature and maintaining the pressure in the reactor at 0.2 MPa to 0.4 MPa at the same time, and a total input amount of chlorine may be 650 kg to 750 kg.

Further, the chlorinated polyethylene may have a hardness of 50 or less or 40 to 50, or 49 or less or 40 to 49, or 48 or less or 40 to 48, or 47 or less or 41 to 47, or 46 or less or 42 to 46, or 44 to 46, as measured by Shore A in accordance with GB/T53. In particular, since the polyethylene of the present disclosure has the molecular structure, in which the high-crystalline region is optimized, hardness of the chlorinated polyethylene may be reduced, thereby improving processability.

Specifically, the hardness may be a value measured for the chlorinated polyethylene which is obtained by performing the same chlorination reaction as in measuring the Mooney viscosity (MV). For example, the hardness may be a value measured after processing the chlorinated polyethylene using a roll mill at 135 °C for 5 minutes, and then producing a sheet with a thickness of 6 mm at 140 °C using a press.

Further, the chlorinated polyethylene may have heat of fusion of 1.5 J/g or less, or 0.1 J/g to 1.5 J/g, or 1.2 J/g or less, or 0.2 J/g to 1.2 J/g, or 1.0 J/g or less, or 0.3 J/g to 1.0 J/g, or 0.9 J/g or less, or 0.4 J/g to 0.9 J/g, or 0.8 J/g or less, or 0.4 J/g to 0.8 J/g, or 0.7 J/g to 0.8 J/g. In particular, the heat of fusion of the chlorinated polyethylene represents the degree of residual crystals (DSC 1$^{st}$ heating, 30 °C to 150 °C peak). As the residual crystals of the chlorinated polyethylene is lower, the hardness is lower and dispersity in the CPE compound is excellent, thereby improving processability (comp'd MV) and size stability (plasticity).

Specifically, the heat of fusion may be a value measured for the chlorinated polyethylene which is obtained by performing the same chlorination reaction as in measuring the Mooney viscosity (MV). Further, the heat of fusion may be measured using a differential scanning calorimeter (DSC, instrument name: DSC 2920, manufacturer: TA instrument). For example, heat flow data are obtained by heating DSC from -70 °C to 150 °C at a heating rate of 10 °C per min. At this time, the heat of fusion may be obtained by integrating peaks that appeared between 30 °C and 150 °C through a TA Universal Analysis program of TA instrument.

Methods of measuring Mooney viscosity (MV), hardness, and heat of fusion of the chlorinated polyethylene are as described in Test Example 2 to be described later, and detailed measurement methods are omitted herein.

For example, the chlorinated polyethylene may have a chlorine content of 20% by weight to 50% by weight, 31%

by weight to 45% by weight, or 35% by weight to 40% by weight. Here, the chlorine content of the chlorinated polyethylene may be measured using combustion ion chromatography (Combustion IC, Ion Chromatography). For example, the combustion ion chromatography uses a combustion IC (ICS-5000/AQF-2100H) device equipped with an IonPac AS18 (4×250 mm) column. The chlorine content may be measured using KOH (30.5 mM) as an eluent at a flow rate of 1 mL/min at an inlet temperature of 900 °C and an outlet temperature of 1000 °C. The device conditions and measurement conditions for measuring the chlorine content are as described in Test Example 2 to be described later, the detailed description is omitted.

Specifically, the chlorinated polyethylene according to the present disclosure may have a Mooney viscosity (MV) of 65 to 80, a tensile strength of 12.5 MPa or more or 12.5 MPa to 15 MPa, and a tensile elongation of 900% or more or 900% to 1200% under a condition where the chlorine content is 35% by weight to 40% by weight.

The chlorinated polyethylene may be, for example, a randomly chlorinated polyethylene.

The chlorinated polyethylene prepared according to the present disclosure is excellent in chemical resistance, weather resistance, flame retardancy, or processability, and is widely applied to electric wires or cables.

Meanwhile, according to still another embodiment of the present disclosure, provided is a chlorinated polyethylene (CPE) compound including the above-described chlorinated polyethylene.

In particular, the chlorinated polyethylene (CPE) compound of the present disclosure is characterized by showing very excellent mechanical properties while minimizing deterioration of processability even during high-speed extrusion by optimizing all of the entanglement molecular weight (Me) and the melt flow rate ratio ($MFRR_{21.6/5}$) of polyethylene and achieving high degree of crosslinking due to a narrow molecular weight distribution.

The chlorinated polyethylene (CPE) compound is mainly applied to electric wires and cables, and has excellent characteristics in processability, surface appearance and gloss of a molded article, and tensile strength for cross-linked compound.

The chlorinated polyethylene (CPE) compound may include 1% by weight to 80% by weight, 10% by weight to 70% by weight, 20% by weight to 60% by weight of the chlorinated polyethylene prepared by the method as described above.

For example, the chlorinated polyethylene (CPE) compound may include 100 parts by weight to 280 parts by weight of an inorganic additive such as talc and carbon black and 1 part by weight to 40 parts by weight of a crosslinking agent, based on 100 parts by weight of the chlorinated polyethylene.

For a specific example, the chlorinated polyethylene (CPE) compound may include 25% by weight to 50% by weight of the chlorinated polyethylene, 50% by weight to 70% by weight of an inorganic additive such as talc and carbon black, and 0.5% by weight to 10% by weight of a crosslinking agent.

The chlorinated polyethylene (CPE) compound is prepared with an inorganic additive (for example, talc, or carbon black), a plasticizer, and a cross-linking agent, and crosslinked at 140 °C to 200 °C, followed by measuring a Mooney viscosity (MV) of the chlorinated polyethylene (CPE) compound at 100 °C using a Mooney viscometer. The Mooney viscosity may be 30 or more to 48. Specifically, the chlorinated polyethylene (CPE) compound may have Mooney viscosity (MV) of 32 or more, or 34 or more, or 33 or more, or 37 or more, or 37.5 or more, or 38 or more, or 38.5 or more, and 45 or less, or 46 or less, or 43 or less, or 41.5 or less, or 40 or less, or 39.5 or less, or 39.2 or less. Further, the chlorinated polyethylene (CPE) compound may have a tensile strength of 9.2 MPa or more or 9.2 MPa to 30 MPa, or 9.4 MPa or more or 9.4 MPa to 20 MPa, or 9.5 MPa or more or 9.5 MPa to 15 MPa, or 9.5 MPa to 12 MPa, or 9.5 MPa to 10 MPa, as measured in accordance with ASTM D 412. The chlorinated polyethylene (CPE) compound may have a tensile elongation of 500% or more or 500% to 1000%, or 505% or more or 505% to 800%, or 510% or more or 510% to 600%, or 515% or more or 515% to 550%, or 520% or more or 520% to 530%, as measured in accordance with ASTM D 412.

Further, the chlorinated polyethylene (CPE) compound may have a plasticity (%) of 42% or more or 42% to 65%, or 43% or more or 43% to 60%, or 44% or more or 44% to 55%, or 44% to 45.2%, or 44% to 44.6%, as measured in accordance with ASTM D 926. The plasticity is a property, in which an object, whose shape has been changed by an external force, does not return to its original shape even when the external force is removed. As the plasticity is higher, the processability and size stability are more improved. The chlorinated polyethylene (CPE) compound may have a plasticity of 42% or more in terms of realizing excellent extrusion size stability while ensuring excellent extrusion processing when processing for cable wires.

Specifically, the plasticity of the chlorinated polyethylene (CPE) compound may be measured at 70 °C under a load of 5 kg.

For example, the plasticity of the chlorinated polyethylene (CPE) compound is determined as follows: a CPE compound specimen with a height of 10 mm and a diameter of 16 mm (height $h_0$ of the specimen) is measured at 70 °C under a load of 5 kg, and preheated at 70 °C for 3 minutes. A load of 5 kg is applied and a height ($h_1$) of the deformed specimen is measured. Then, the load is removed, and after 3 minutes at room temperature, a height ($h_2$) of the recovered specimen is measured. The plasticity (%) of the CPE compound is calculated according to Equation 1 below.

[Equation 1]

$$P = (h_0-h_2) / (h_0+h_1)$$

in Equation 1,

P represents plasticity (%) of a CPE compound,
$h_0$ represents a height (mm) of a specimen before deformation when measuring plasticity,
$h_1$ represents a height (mm) of the specimen deformed by preheating at 70 °C for 3 minutes and applying a load of 5 kg, and
$h_2$ represents a height (mm) of the specimen measured after 3 minutes at room temperature after removing the load.

In addition, a method of manufacturing a molded article using the chlorinated polyethylene according to the present disclosure may be performed by applying a traditional method in the art. For example, the molded article may be manufactured by roll-mill compounding the chlorinated polyethylene and extruding it.

Hereinafter, preferred examples will be provided for better understanding of the present invention. However, the following examples are provided only for understanding the present invention more easily, but the content of the present invention is not limited thereby.

**<Example>**

**[Preparation of Catalyst Precursor]**

**Synthesis Example 1: Preparation of first metallocene compound**

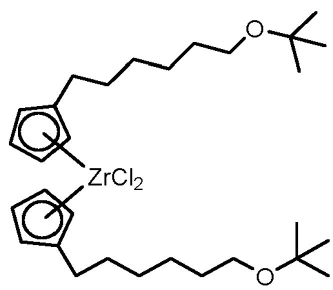

t-butyl-O-$(CH_2)_6$-Cl was prepared by a method described in a literature (Tetrahedron Lett. 2951(1988)) using 6-chlorohexanol, and reacted with cyclopentadienyl sodium (NaCp) to obtain t-butyl-O-$(CH_2)_6$-$C_5H_5$ (yield 60%, b.p. 80 °C /0.1 mmHg).

Further, t-butyl-O-$(CH_2)_6$-$C_5H_5$ was dissolved in tetrahydrofuran (THF) at -78 °C, and n-butyllithium (n-BuLi) was slowly added thereto. Thereafter, the mixture was heated to room temperature and allowed to react for 8 hours. The lithium salt solution synthesized as described above was slowly added to a suspension solution of $ZrCl_4(THF)_2$ (170 g, 4.50 mmol)/THF(30 mL) at -78 °C, and further reacted for 6 hours at room temperature. All volatiles were removed by drying under vacuum and the resulting oily liquid material was filtered by adding hexane. The filtered solution was dried under vacuum, and hexane was added to obtain a precipitate at a low temperature (-20 °C). The obtained precipitate was filtered at a low temperature to obtain [t-butyl-O-$(CH_2)_6$-$C_5H_4]_2ZrCl_2$] in the form of a white solid (yield 92%).

$^1$H-NMR (300 MHz, $CDCl_3$): 6.28 (t, J=2.6 Hz, 2H), 6.19 (t, J=2.6 Hz, 2H), 3.31 (t, 6.6 Hz, 2H), 2.62 (t, J=8 Hz), 1.7 - 1.3 (m, 8H), 1.17 (s, 9H).

$^{13}$C-NMR ($CDCl_3$): 135.09, 116.66, 112.28, 72.42, 61.52, 30.66, 30.31, 30.14, 29.18, 27.58, 26.00.

**Synthesis Example 2: Preparation of second metallocene compound**

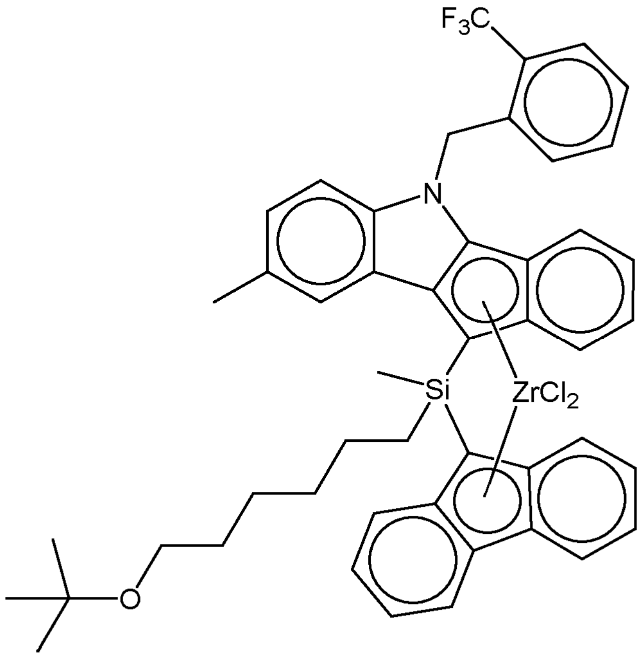

**2-1 Preparation of ligand compound**

2.9 g (7.4 mmol) of 8-methyl-5-(2-(trifluoromethyl)benzyl)-5,10-dihydroindeno[1,2-b]indole was dissolved in 100 mL of hexane and 2 mL (16.8 mmol) of methyl tertialry butyl ether (MTBE), and 3.2 mL (8.1 mmol) of 2.5 M n-butyllithium (n-BuLi) hexane solution was added dropwise in a dry ice/acetone bath and stirred at room temperature overnight. In another 250 mL schlenk flask, 2 g (7.4 mmol) of (6-tert-butoxyhexyl)dichloro(methyl)silane was dissolved in 50 mL of hexane and added dropwise in a dry ice/acetone bath. Then, a lithiated slurry of 8-methyl-5-(2-(trifluoromethyl)benzyl)-5,10-dihydroindeno[1,2-b]indole was added dropwise through a cannula. After the injection, the mixture was slowly heated to room temperature and then stirred at room temperature overnight. At the same time, 1.2 g (7.4 mmol) of fluorene was also dissolved in 100 mL of tetrahydrofuran (THF), and 3.2 mL (8.1 mmol) of 2.5 M n-BuLi hexane solution was added dropwise in a dry ice/acetone bath, followed by stirring at room temperature overnight.

The reaction solution (Si solution) of 8-methyl-5-(2-(trifluoromethyl)benzyl)-5,10-dihydroindeno[1,2-b]indole and (6-(tert-butoxy)hexyl)dichloro(methyl)silane was confirmed by NMR sampling.

$^1H$ NMR (500 MHz, $CDCl_3$): 7.74-6.49 (11H, m), 5.87 (2H, s), 4.05 (1H, d), 3.32 (2H, m), 3.49 (3H, s), 1.50-1.25(8H, m), 1.15 (9H, s), 0.50 (2H, m), 0.17 (3H, d).

After confirming the synthesis, the lithiated solution of fluorene was slowly added dropwise to the Si solution in a dry ice/acetone bath, and stirred at room temperature overnight. After the reaction, it was extracted with ether/water and residual moisture of the organic layer was removed with $MgSO_4$. Then, the solvent was removed under vacuum reduced pressure to obtain 5.5 g (7.4 mmol) of an oily ligand compound, which was confirmed by $^1H$-NMR.

$^1H$ NMR (500 MHz, $CDCl_3$): 7.89-6.53 (19H, m), 5.82 (2H, s), 4.26 (1H, d), 4.14-4.10 (1H, m), 3.19 (3H, s), 2.40 (3H, m), 1.35-1.21 (6H, m), 1.14 (9H, s), 0.97-0.9 (4H, m), -0.34 (3H, t).

**2-2 Preparation of metallocene compound**

5.4 g (Mw 742.00, 7.4 mmol) of the ligand compound synthesized in 2-1 was dissolved in 80 mL of toluene and 3 mL (25.2 mmol) of MTBE, and 7.1 mL (17.8 mmol) of 2.5 M n-BuLi hexane solution was added dropwise in a dry ice/acetone bath, followed by stirring at room temperature overnight. 3.0 g (8.0 mmol) of $ZrCl_4(THF)_2$ was added to 80 mL of toluene to prepare a slurry. 80 mL of the toluene slurry of $ZrCl_4(THF)_2$ was transferred to a ligand-Li solution in a dry ice/acetone bath and stirred at room temperature overnight.

After the reaction mixture was filtered to remove LiCl, the toluene of the filtrate was removed by drying under vacuum, and then 100 mL of hexane was added thereto, followed by sonication for 1 hour. This was filtered to obtain 3.5 g (yield 52 mol%) of a purple metallocene compound as a filtered solid.

$^1H$ NMR (500 MHz, $CDCl_3$): 7.90-6.69 (9H, m), 5.67 (2H, s), 3.37 (2H, m), 2.56 (3H, s), 2.13-1.51 (11H, m), 1.17 (9H, s).

**Synthesis Example 3: Preparation of second metallocene compound**

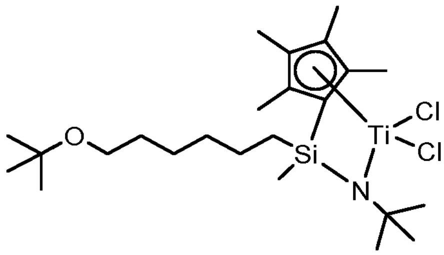

50 g of Mg (s) was added to a 10 L reactor at room temperature, followed by adding 300 mL of THF. 0.5 g of $I_2$ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature was increased by 4 °C to 5 °C with the addition of 6-t-butoxyhexylchloride. It was stirred for 12 hours while continuously adding 6-t-butoxyhexylchloride to obtain a black reaction solution. 2 mL of the black solution was taken to which water was added to obtain an organic layer. The organic layer was confirmed to be 6-t-butoxyhexane through $^1$HNMR, indicating that Grignard reaction occurred well. Consequently, 6-t-butoxyhexyl magnesium chloride was synthesized.

500 g of $MeSiCl_3$ and 1 L of THF were introduced to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. Then, it was confirmed that white $MgCl_2$ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxyhexyl)dichlorosilane through $^1$H-NMR.

$^1$H-NMR ($CDCl_3$): 3.3 (t, 2H), 1.5 (m, 3H), 1.3 (m, 5H), 1.2 (s, 9H), 1.1 (m, 2H), 0.7 (s, 3H)

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. Then, an equivalent of methyl(6-t-butoxyhexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-$BuNH_2$ was added. The mixture was stirred for 12 hours while slowly raising the reactor temperature to room temperature. Then, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through $^1$H-NMR.

$TiCl_3(THF)_3$ (10 mmol) was rapidly added to a dilithium salt of a ligand at -78 °C, which was synthesized from n-BuLi and the ligand of dimethyl(tetramethylCpH)t-butylaminosilane in THF solution. While slowly heating the reaction solution from -78 °C to room temperature, it was stirred for 12 hours. Then, an equivalent of $PbCl_2$ (10 mmol) was added to the reaction solution at room temperature, and then stirred for 12 hours to obtain a dark black solution having a blue color. After removing THF from the resulting reaction solution, hexane was added to filter the product. Hexane was removed from the filtered solution, and then the product was confirmed to be $[tBu\text{-}O\text{-}(CH_2)_6](CH_3)Si(C_5(CH_3)_4)(tBu\text{-}N)TiCl_2]$ through $^1$H-NMR.

$^1$H-NMR ($CDCl_3$): 3.3 (s, 4H), 2.2 (s, 6H), 2.1 (s, 6H), 1.8 - 0.8 (m), 1.4 (s, 9H), 1.2 (s, 9H), 0.7 (s, 3H).

**[Preparation of Supported Catalyst]**

**Preparation Example 1: Preparation of supported catalyst**

5.0 kg of a toluene solution was put in a 20 L stainless steel (sus) high-pressure reactor, and the reactor temperature was maintained at 40 °C. 1000 g of silica (SP948, manufactured by Grace Davison Co.) dehydrated at a temperature of 600 °C for 12 hours under vacuum was added to the reactor, and the silica was sufficiently dispersed, and then 84 g of the metallocene compound of Synthesis Example 1 dissolved in toluene was added thereto and then allowed to react under stirring at 200 rpm at 40 °C for 2 hours. Thereafter, the stirring was stopped, followed by settling for 30 minutes and decantation of the reaction solution.

2.5 kg of toluene was added to the reactor, and 9.4 kg of 10 wt% methylaluminoxane (MAO)/toluene solution was added thereto, followed by stirring at 200 rpm at 40 °C for 12 hours. After the reaction, the stirring was stopped, followed by settling for 30 minutes and decantation of the reaction solution. 3.0 kg of toluene was added and stirred for 10 minutes, and then the stirring was stopped, followed by settling for 30 minutes and decantation of the toluene solution.

3.0 kg of toluene was added to the reactor, 116 g of the metallocene compound of Synthesis Example 2 dissolved in 1 L of a toluene solution was added thereto, and allowed to react under stirring at 200 rpm at 40 °C for 2 hours. At this time, the metallocene compound of Synthesis Example 1 and the metallocene compound of Synthesis Example 2 were used at a molar ratio of 42:58. After lowering the reactor temperature to room temperature, the stirring was stopped, followed by settling for 30 minutes and decantation of the reaction solution.

2.0 kg of toluene was added to the reactor and stirred for 10 minutes. Then, the stirring was stopped, followed by settling for 30 minutes and decantation of the reaction solution.

3.0 kg of hexane was added to the reactor, a hexane slurry was transferred to a filter drier, and the hexane solution was filtered. 1 kg-$SiO_2$ supported hybrid catalyst was prepared by drying under reduced pressure at 40 °C for 4 hours.

**Comparative Preparation Example 1: Preparation of supported catalyst**

A supported hybrid catalyst was prepared in the same manner as in Preparation Example 1, except that the ratio of the metallocene compound of Synthesis Example 1 and the metallocene compound of Synthesis Example 2 was changed to 35:65, based on the weight.

**Comparative Preparation Example 2: Preparation of supported catalyst**

A supported hybrid catalyst was prepared in the same manner as in Preparation Example 1, except that the ratio of the metallocene compound of Synthesis Example 1 and the metallocene compound of Synthesis Example 2 was changed to 60:40, based on the weight.

**Comparative Preparation Example 3: Preparation of supported catalyst**

A supported hybrid catalyst was prepared in the same manner as in Preparation Example 1, except that the metallocene compound of Synthesis Example 3 was used instead of the metallocene compound of Synthesis Example 2.

**[Preparation of polyethylene]**

**Example 1-1**

The supported catalyst prepared in Preparation Example 1 was added to a single slurry polymerization process to prepare a high-density polyethylene.

First, a reactor with a capacity of 100 $m^3$ was charged with a flow rate of 25 ton/hr of hexane, 10 ton/hr of ethylene, 120 ppm of hydrogen (relative to ethylene), and 10 kg/hr of triethylaluminum (TEAL), and the supported hybrid metallocene catalyst of Preparation Example 1 was injected to the reactor at 0.5 kg/hr. Thereafter, the ethylene was continuously reacted in a hexane slurry state at a reactor temperature of 82 °C and a pressure of 7.0 kg/$cm^2$ to 7.5 kg/$cm^2$. Then, solvent removal and drying processes were performed to prepare a high-density polyethylene in a powder form.

**Example 1-2**

A high-density polyethylene was prepared in a powder form in the same manner as in Example 1-1, except that the hydrogen input amount was changed to 125 ppm.

**Example 1-3**

A high-density polyethylene was prepared in a powder form in the same manner as in Example 1-1, except that the hydrogen input amount was changed to 130 ppm.

**Comparative Example 1-1**

A high-density polyethylene (HDPE) commercial product (Z/N-1, CE2030K, manufactured by LG Chem), which was prepared using a Ziegler-Natta catalyst, and of which $MI_5$ (melt index, as measured at 190 °C under a load of 5 kg) was 1.7 g/10min, was prepared for Comparative Example 1-1.

**Comparative Example 1-2**

A high-density polyethylene (HDPE) commercial product (Z/N-2, CE2080, manufactured by LG Chem), which was prepared using a Ziegler-Natta catalyst, and of which $MI_5$ (melt index, as measured at 190 °C under a load of 5 kg) was 1.2 g/10min, was prepared for Comparative Example 1-2.

**Comparative Example 1-3**

A high-density polyethylene (HDPE) pilot product (Z/N-3, manufactured by LG Chem), which was prepared using a Ziegler-Natta catalyst, and of which $MI_5$ (melt index, as measured at 190 °C under a load of 5 kg) was 1.5 g/10min, was prepared for Comparative Example 1-3.

**Comparative Example 1-4**

A high-density polyethylene of Comparative Example 1-4 was prepared in a powder form in the same manner as in Example 1-2, except that the supported catalyst prepared in Comparative Preparation Example 1 was used instead of the supported catalyst prepared in Preparation Example 1.

**Comparative Example 1-5**

A high-density polyethylene of Comparative Example 1-5 was prepared in a powder form in the same manner as in Example 1-2, except that the supported catalyst prepared in Comparative Preparation Example 2 was used instead of the supported catalyst prepared in Preparation Example 1.

**Comparative Example 1-6**

A high-density polyethylene of Comparative Example 1-6 was prepared in a powder form in the same manner as in Example 1-1, except that the supported catalyst prepared in Comparative Preparation Example 3 was used instead of the supported catalyst prepared in Preparation Example 1.

**Test Example 1**

Physical properties of the polyethylenes prepared in Examples 1-1 to 1-3 and Comparative Examples 1-1 to 1-6 were measured by the following methods, and the results are shown in Table 1 below.

**1) Melt index (MI, g/10min):**

The melt index ($MI_{2.16}$, $MI_5$, $MI_{21.6}$) was measured under a load of 2.16 kg, 5 kg, and 21.6 kg, respectively, in accordance with the ASTM D 1238 method at a temperature of 190 °C. A weight (g) of the polymer melted for 10 minutes was recorded as the melt index.

**2) Melt flow rate ratio (MFRR):**

The melt flow rate ratio (MFRR, $MI_{21.6/5}$) was obtained by dividing the melt index measured at 190 °C under a load of 21.6 kg by the melt index measured at 190 °C under a load of 5 kg in accordance with ASTM D 1238.

**3) Density:**

The density($g/cm^3$) of each polyethylene was measured in accordance with the ASTM D 1505 method.

**4) High-crystalline region ratio (%):**

A temperature rising elution fractionation (TREF) graph for polyethylene was obtained, and an elution temperature of 105 °C on the TREF graph was used as a reference for the vertical axis at which the high-crystalline region starts. Then, a graph area of the high-crystalline region having a temperature equal to or higher than the elution temperature of 105 °C was measured, and a percentage value obtained by dividing the graph area by a total graph area was expressed as the high-crystalline region ratio (%). Here, the temperature rising elution fractionation (TREF) graph for polyethylene was obtained using Agilent Technologies 7890A manufactured by Polymer Char. In more detail, a

polyethylene sample was dissolved in 20 mL of 1,2,4-trichlorobenzene at a concentration of 1.5 mg/mL, and then dissolved by increasing the temperature at a rate of 40 °C/min from 30°C to 150°C, recrystallized by lowering the temperature at a rate of 0.5 °C/min to 35 °C, and then eluted by increasing the temperature at a rate of 1 °C/min to 140 °C to obtain the graph.

**5) Molecular weight distribution (MWD, polydispersity index):**

The molecular weight distribution (MWD) was determined by measuring a weight average molecular weight (Mw) and a number average molecular weight (Mn) of the polyethylene using gel permeation chromatography (GPC, manufactured by Water), and then dividing the weight average molecular weight by the number average molecular weight.

In particular, Waters PL-GPC220 was used as the gel permeation chromatography (GPC) instrument, and a Polymer Laboratories PLgel MIX-B 300 mm length column was used. In this regard, the measurement temperature was 160 °C, and 1,2,4-trichlorobenzene was used as a solvent, and a flow rate of 1 mL/min was applied. The polyethylene samples according to Examples and Comparative Examples were pretreated by dissolving in 1,2,4-trichlorobenzene containing 0.0125% of BHT at 160 °C for 10 hours using a GPC analyzer (PL-GP220), and each sample was prepared at a concentration of 10 mg/10 mL, and then was supplied in an amount of 200 μL. Mw and Mn values were obtained using a calibration curve formed using polystyrene standards. 9 kinds of polystyrene standards were used, the polystyrene standards having a weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

[Table 1]

| | Example | | | Comparative Example | | | | | |
|---|---|---|---|---|---|---|---|---|---|
| | 1-1 | 1-2 | 1-3 | 1-1 | 1-2 | 1-3 | 1-4 | 1-5 | 1-6 |
| Catalyst | Preparation Example 1 | Preparation Example 1 | Preparation Example 1 | Z/N-1 | Z/N-2 | Z/N-3 | Comparative Preparation Example 1 | Comparative Preparation Example 2 | Comparative Preparation Example 3 |
| $H_2$ input (ppm) during polymerization | 120 | 125 | 130 | - | - | - | 230 | 80 | 120 |
| $MI_{2.16}$ (2.16kg, 190 °C, g/10min) | 0.30 | 0.31 | 0.32 | 0.41 | 0.32 | 0.30 | 0.34 | 0.15 | 0.85 |
| $MI_5$ (5kg, 190 °C, g/10min) | 1.1 | 1.3 | 1.4 | 1.7 | 1.2 | 1.5 | 1.5 | 0.6 | 3.0 |
| MFRR (21.6/5) | 19 | 19.5 | 20 | 17.5 | 15.6 | 17.2 | 22 | 16 | 10.5 |
| Density (g/cm$^3$) | 0.957 | 0.958 | 0.959 | 0.958 | 0.958 | 0.957 | 0.959 | 0.955 | 0.955 |
| High-crystalline region ratio (wt%, TREF, 105°C or higher) | 7.6 | 7.7 | 7.8 | 18 | 11.2 | 7.9 | 8.2 | 7.5 | 5.3 |
| Mw ($\times 10^3$ g/mol) | 153 | 150 | 147 | 175 | 180 | 177 | 146 | 179 | 93 |
| Molecular weight distribution (Mw/Mn) | 7.2 | 7.4 | 7.6 | 15.5 | 9.1 | 15.2 | 8.6 | 6.4 | 3.9 |

In Table 1, the $H_2$ input amount (ppm) during polymerization represents a hydrogen gas content, based on the ethylene input amount.

As shown in Table 1, as compared with Comparative Examples, Examples showed that CPE had optimized MV of 50 to 60 due to MI, MFRR, and molecular structure, thereby exhibiting excellent mechanical properties such as tensile

strength, together with excellent extrusion processability and size stability even during a high-speed extrusion process when applied to electric wires or cables.

**Test Example 2**

The polyethylenes prepared in Examples 1-1 to 1-3 and Comparative Examples 1-1 to 1-6 were used to prepare chlorinated polyethylenes, respectively.

**[Preparation of chlorinated polyethylene]**

5000 L of water and 550 kg of high-density polyethylene prepared in Example 1-1 were added to a reactor, and then sodium polymethacrylate as a dispersant, oxypropylene and oxyethylene copolyether as an emulsifier, and benzoyl peroxide as a catalyst were added thereto. Then, the temperature was raised from 80 °C to 132 °C at a rate of 17.3 °C/hr and chlorination was carried out by injecting gaseous chlorine at a final temperature of 132 °C for 3 hours. At this time, the chlorination reaction was performed by injecting the gaseous chlorine at a reactor pressure of 0.3 MPa while raising the temperature, and a total input of chlorine was 610 kg. The chlorinated reactant was neutralized with NaOH for 4 hours, washed again with running water for 4 hours, and finally dried at 120 °C to prepare a chlorinated polyethylene in a powder form.

In the same manner, each of the polyethylenes prepared in Examples 1-2 to 1-3 and Comparative Examples 1-1 to 1-6 was also used to prepare each chlorinated polyethylene in a powder form.

Physical properties were measured by the following methods for the chlorinated polyethylenes of Examples 2-1 to 2-3 and Comparative Examples 2-1 to 2-6 prepared by using the polyethylenes prepared in Examples 1-1 to 1-3 and Comparative Examples 1-1 to 1-6, respectively. The results are shown in Table 2, below.

**1) Mooney viscosity (MV) of CPE:**

A rotor in a Mooney viscometer was wrapped with a CPE sample and a die was closed. After preheating to 121 °C for 1 min, the rotor was rotated for 4 min to measure Mooney viscosity (MV, 121 °C, ML1+4).

**2) Hardness of CPE:**

Hardness of CPE was measured by Shore A in accordance with GB/T53. In particular, a chlorinated polyethylene (CPE) powder product was treated with a roll mill at 135 °C for 5 minutes, and a sheet with a thickness of 6 mm was manufactured by a press at 140 °C, and used to measure hardness by Shore A in accordance with GB/T53.

**3) Heat of fusion (J/g) of CPE:**

The heat of fusion of CPE was measured using a differential scanning calorimeter (DSC, instrument name: DSC 2920, manufacturer: TA instrument).

In particular, the heat of fusion (J/g) represents the degree of residual crystals (DSC 1$^{st}$ heating, 30 °C to 50 °C peak), and heat flow data are obtained by heating DSC from -70 °C to 150 °C at a heating rate of 10 °C per min. At this time, the heat of fusion was obtained by integrating peaks that appeared between 30 °C and 150 °C through a TA Universal Analysis program of TA instrument. At this time, temperature was increased or decreased at a rate of 10 °C/min, and the heat of fusion was determined by the result measured in the 1$^{st}$ heating cycle.

[Table 2]

| | Example | | | Comparative Example | | | | | |
|---|---|---|---|---|---|---|---|---|---|
| | 2-1 | 2-2 | 2-3 | 2-1 | 2-2 | 2-3 | 2-4 | 2-5 | 2-6 |
| MV (121 °C, ML1+4) of CPE | 54 | 53 | 52 | 57 | 72 | 53 | 45 | 65 | 53 |
| Hardness (Shore A) of CPE | 46 | 45 | 44 | 49 | 48 | 50 | 45 | 46 | 52 |
| Heat of fusion (J/g) of CPE | 0.8 | 0.7 | 0.8 | 14.4 | 4.9 | 2.2 | 1 | 0.8 | 20.5 |

As shown in Table 2, as compared with Comparative Examples, Examples showed that Mooney viscosity (MV) of CPE was 52 to 54 and the heat of fusion was 0.7 J/g to 0.8 J/g, and residual crystals (DSC 1$^{st}$ heating, 30 °C to 150 °C peak) were small and thus chlorine distribution was uniform, and therefore, hardness was as low as 44 to 46. In particular, as

compared with Comparative Example 2-3 having MV equivalent to those of Examples, Examples 2-1 and 2-3 showed that the heat of fusion of CPE was lower by 63%, and Example 2-2 showed that the heat of fusion of CPE was lower by 68%, indicating that excellent processability was achieved. Further, since Comparative Example 2-6 had a low high-crystalline region ratio, its hardness or heat of fusion should be low. However, the molecular weight of the polyethylene was too low, and thus hardness and heat of fusion were remarkably increased, and chlorination productivity was greatly reduced, and the uniform chlorination reaction did not properly occur.

**Test Example 3**

25% by weight to 50% by weight of the chlorinated polyethylenes prepared using the polyethylenes prepared in Examples 1-1 to 1-3 and Comparative Examples 1-1 to 1-5, and 50% by weight to 70% by weight of an inorganic additive, such as talc, or carbon black, and 0.5% by weight to 10% by weight of a crosslinking agent were compounded and processed to prepare CPE compound specimens of Examples 3-1 to 3-3 and Comparative Examples 3-1 to 3-5, respectively.

Physical properties were measured by the following methods for the CPE compounds of Examples 3-1 to 3-3 and Comparative Examples 3-1 to 3-5 including the chlorinated polyethylenes prepared using the polyethylenes of Examples 1-1 to 1-3 and Comparative Examples 1-1 to 1-5 as described above, and the results are shown in Table 3 below.

**1) Mooney viscosity (MV) of CPE compound:**

A rotor in an MV instrument was wrapped with a CPE compound sample and a die was closed. After preheating to 100 °C for 1 min, the rotor was rotated for 4 min to measure Mooney viscosity (MV, 100 °C, ML1+4).

**2) Tensile strength (MPa) and Tensile elongation (%) of CPE compound:**

The tensile strength (MPa) and the tensile elongation (%) of the CPE compounds were measured under a condition of 500 mm/min in accordance with ASTM D 412.

**3) Plasticity(%) of CPE compound:**

The plasticity (%) of the CPE compounds was measured under conditions of 70 °C and a load of 5 kg in accordance with ASTM D 926.

In particular, the CPE compound specimen with a height of 10 mm and a diameter of 16 mm (height $h_0$ of the specimen) was measured at 70 °C under a load of 5 kg, and preheated at 70 °C for 3 minutes. A load of 5 kg was applied and a height ($h_1$) of the deformed specimen was measured. Then, the load was removed, and after 3 minutes at room temperature, a height ($h_2$) of the recovered specimen was measured. The plasticity (%) of the CPE compound is calculated according to Equation 1 below.

[Equation 1]

$$P = (h_0-h_2) / (h_0+h_1)$$

in Equation 1,

P represents plasticity (%) of a CPE compound,
$h_0$ represents a height (mm) of a specimen before deformation when measuring plasticity,
$h_1$ represents a height (mm) of the specimen deformed by preheating at 70 °C for 3 minutes and applying a load of 5 kg, and
$h_2$ represents a height (mm) of the specimen measured after 3 minutes at room temperature after removing the load.

[Table 3]

| | Example | | | Comparative Example | | | | |
|---|---|---|---|---|---|---|---|---|
| | 3-1 | 3-2 | 3-3 | 3-1 | 3-2 | 3-3 | 3-4 | 3-5 |
| MV (100 °C, ML1+4) of CPE compound | 39.2 | 38.9 | 38.5 | 40.7 | 55.8 | 41.6 | 34.6 | 50 |

(continued)

| | Example | | | Comparative Example | | | | |
|---|---|---|---|---|---|---|---|---|
| | 3-1 | 3-2 | 3-3 | 3-1 | 3-2 | 3-3 | 3-4 | 3-5 |
| Tensile strength (MPa) of CPE compound | 10 | 10 | 9.5 | 9 | 12 | 9 | 9 | 10 |
| Tensile elongation (%) of CPE compound | 520 | 520 | 530 | 490 | 480 | 490 | 530 | 520 |
| Plasticity (%) of CPE compound | 44.3 | 44.6 | 44.1 | 36.7 | 38.5 | 40.3 | 41.9 | 45.8 |

As shown in Table 3, as compared with Comparative Examples, Examples showed that CPE compounds had MV (Mooney viscosity) of 38.5 to 39.2, very excellent tensile strength and elongation of 9.5 MPa to 10 MPa and 520% to 530%, and very excellent plasticity of 44.1% to 44.6%. Therefore, Examples according to the present disclosure were found to have a balanced product specification in terms of chloride productivity, MV, processability, tensile strength, and plasticity.

In contrast, the CPE compounds of Comparative Examples 3-1, 3-3, and 3-4 had low tensile strength, and may have poor mechanical properties, when processed into electric wires and cables. In particular, the CPE compound of Comparative Example 3-4 had low CPE MV, and thus its tensile strength was reduced, and the CPE compounds of Comparative Examples 3-2 and 3-5 had high CPE MV, and thus may have reduced extrusion processability during a high-speed extrusion process when applied to electric wires or cables.

## Claims

1. An ethylene homopolymer, having

   a $MI_5$, which is a melt index measured at 190 °C under a load of 5 kg, of 0.95 g/10min to 1.4 g/10min,
   a melt flow rate ratio $MFRR_{21.6/5}$, which is a value obtained by dividing the melt index measured at 190 °C under a load of 21.6 kg by the melt index measured at 190 °C under a load of 5 kg in accordance with ASTM D 1238, is 18 to 22, and
   a high-crystalline region ratio on a temperature rising elution fractionation (TREF) graph is 10% or less, wherein the high-crystalline region ratio is a percentage value obtained by dividing a graph area of the high-crystalline region at an elution temperature of 105 °C or higher by a total graph area.

2. The ethylene homopolymer according to Claim 1, which has a $MI_{2.16}$ , which is a melt index measured at 190 °C under a load of 2.16 kg, of 0.01 g/10min to 0.45 g/10min.

3. The ethylene homopolymer according to Claim 1, wherein the high-crystalline region ratio is 3% to 10%.

4. The ethylene homopolymer according to Claim 1, which has a density of 0.955 $g/cm^3$ to 0.960 $g/cm^3$.

5. The ethylene homopolymer according to Claim 1, which has a molecular weight distribution Mw/Mn is 5 to 10.

6. The ethylene homopolymer according to Claim 1, which has a weight average molecular weight is 110000 g/mol to 250000 g/mol.

7. A process for preparing the ethylene homopolymer according to any one of Claims 1 to 6, comprising the step of polymerizing ethylene in the presence of at least one first metallocene compound represented by the following Chemical Formula 1; and at least one second metallocene compound selected from compounds represented by the following Chemical Formula 2, wherein a weight ratio of the first metallocene compound and the second metallocene compound is 40:60 to 45:55:

[Chemical Formula 1]

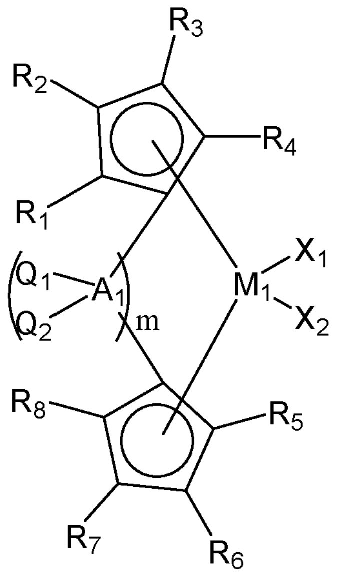

in Chemical Formula 1,

any one or more of $R_1$ to $R_8$ are $-(CH_2)_n-OR$, wherein R is $C_{1-6}$ linear or branched alkyl, and n is an integer of 2 to 6; the rest of $R_1$ to $R_8$ are the same as or different from each other, and are each independently a functional group selected from the group consisting of hydrogen, halogen, $C_{1-20}$ alkyl, $C_{2-20}$ alkenyl, $C_{6-20}$ aryl, $C_{7-40}$ alkylaryl, and $C_{7-40}$ arylalkyl; or two or more of the substituents that are adjacent to each other are connected with each other to form a $C_{6-20}$ aliphatic or aromatic ring unsubstituted or substituted with a $C_{1-10}$ hydrocarbyl group;

$Q_1$ and $Q_2$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl;

$A_1$ is carbon, silicon, or germanium;

$M_1$ is a Group 4 transition metal;

$X_1$ and $X_2$ are the same as or different from each other, and are each independently halogen, $C_{1-20}$ alkyl, $C_{2-20}$ alkenyl, $C_{6-20}$ aryl, nitro group, amido group, $C_{1-20}$ alkylsilyl, $C_{1-20}$ alkoxy, or a $C_{1-20}$ sulfonate group; and

m is an integer of 0 or 1,

[Chemical Formula 2]

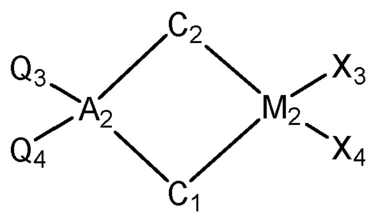

in Chemical Formula 2,

$Q_3$ and $Q_4$ are the same as or different from each other, and are each independently hydrogen, halogen, $C_{1-20}$ alkyl, $C_{2-20}$ alkenyl, $C_{2-20}$ alkoxyalkyl, $C_{6-20}$ aryl, $C_{7-40}$ alkylaryl, or $C_{7-40}$ arylalkyl;

$A_2$ is carbon, silicon, or germanium;

$M_2$ is a Group 4 transition metal;

$X_3$ and $X_4$ are the same as or different from each other, and are each independently halogen, $C_{1-20}$ alkyl, $C_{2-20}$ alkenyl, $C_{6-20}$ aryl, a nitro group, an amido group, $C_{1-20}$ alkylsilyl, $C_{1-20}$ alkoxy, or a $C_{1-20}$ sulfonate group; and

any one of $C_1$ and $C_2$ is represented by the following Chemical Formula 3a or 3b, and the other is represented by the following Chemical Formula 3c, 3d, or 3e;

[Chemical Formula 3a]

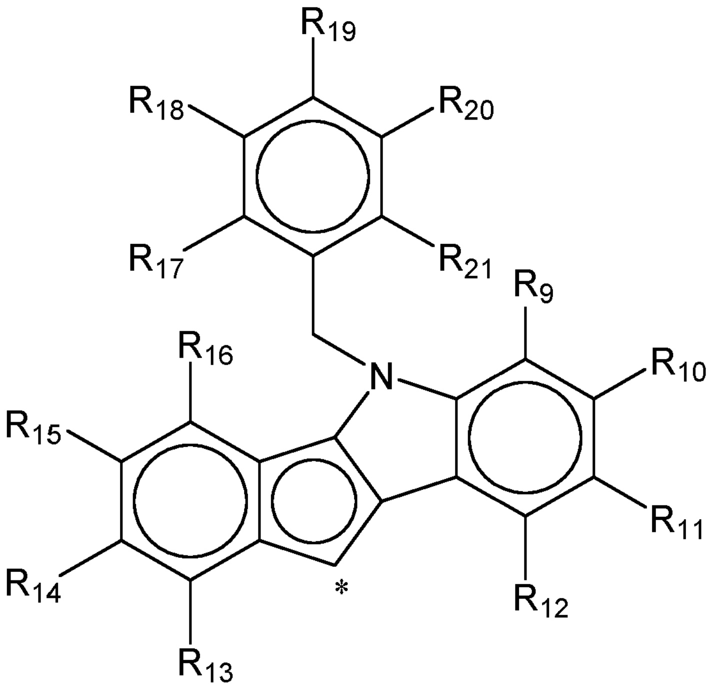

[Chemical Formula 3b]

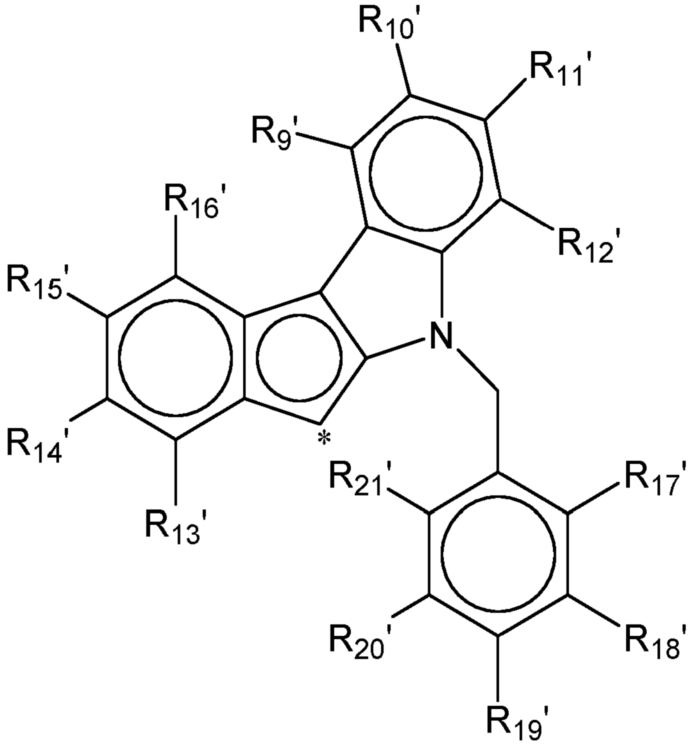

[Chemical Formula 3c]

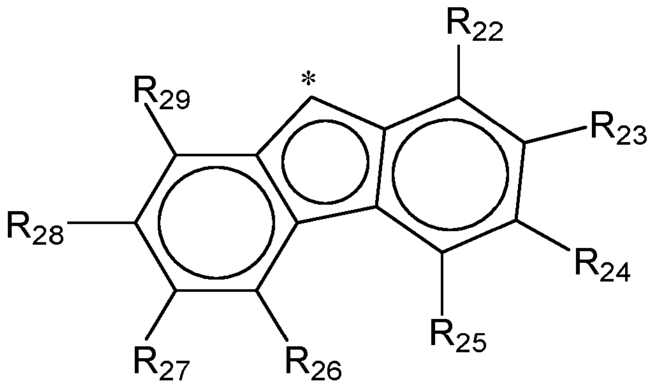

[Chemical Formula 3d]

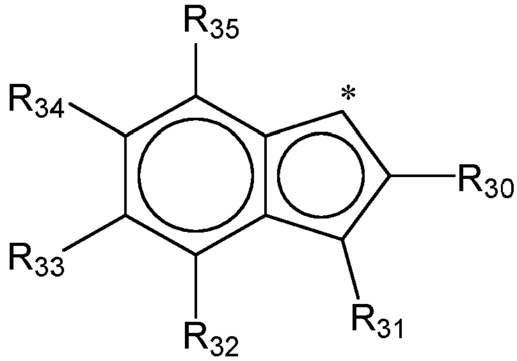

[Chemical Formula 3e]

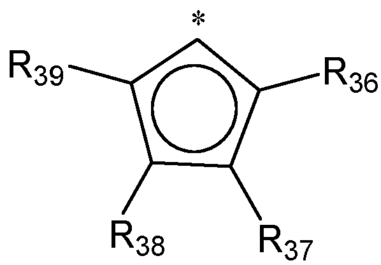

in Chemical Formulae 3a, 3b, 3c, 3d and 3e, $R_9$ to $R_{21}$ and $R_{9'}$ to $R_{21'}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, provided that one or more of $R_{17}$ to $R_{21}$ or one or more of $R_{17'}$ to $R_{21'}$ are $C_{1-20}$ haloalkyl;

$R_{22}$ to $R_{39}$ are the same as or different from each other, and are each independently hydrogen, halogen, $C_{1-20}$ alkyl, $C_{1-20}$ haloalkyl, $C_{2-20}$ alkenyl, $C_{1-20}$ alkylsilyl, $C_{1-20}$ silylalkyl, $C_{1-20}$ alkoxysilyl, $C_{1-20}$ alkoxy, $C_{6-20}$ aryl, $C_{7-40}$ alkylaryl, or $C_{7-40}$ arylalkyl, or two or more of $R_{22}$ to $R_{39}$ that are adjacent to each other are connected with each other to form a $C_{6-20}$ aliphatic or aromatic ring unsubstituted or substituted with a $C_{1-10}$ hydrocarbyl group; and

* represents a site of binding to $A_2$ and $M_2$.

**8.** The process for preparing the ethylene homopolymer according to Claim 7, wherein the first metallocene compound is represented by any one of the following Chemical Formulae 1-1 to 1-4:

[Chemical Formula 1-1]

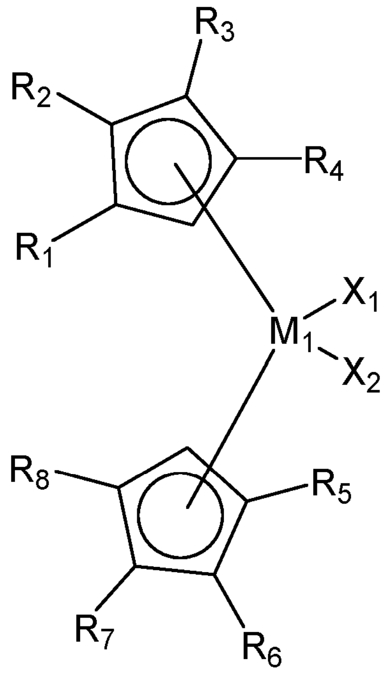

[Chemical Formula 1-2]

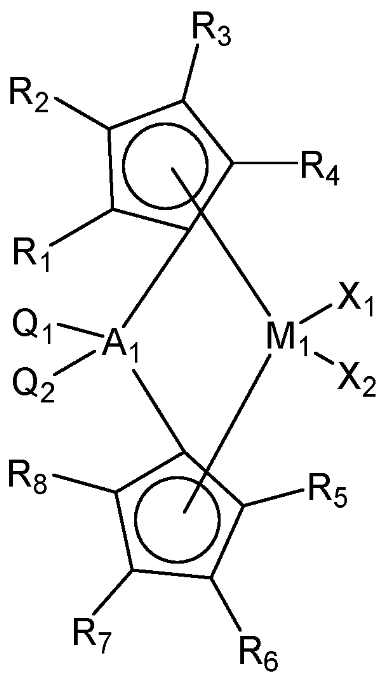

[Chemical Formula 1-3]

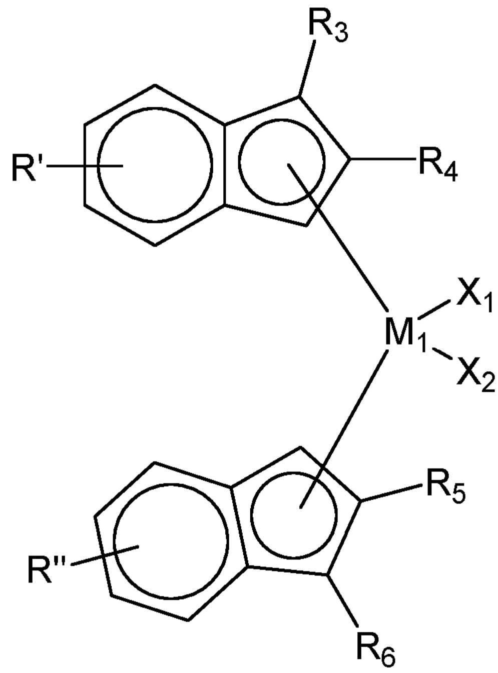

[Chemical Formula 1-4]

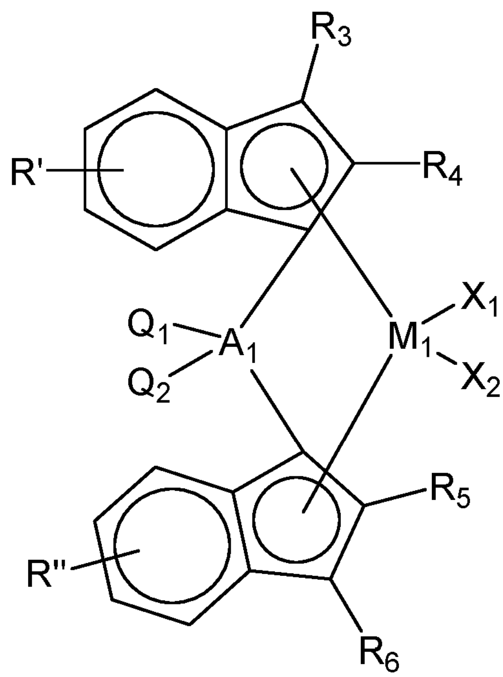

in Chemical Formulae 1-1 to 1-4,

$Q_1$, $Q_2$, $A_1$, $M_1$, $X_1$, $X_2$, and $R_1$ to $R_8$ are the same as defined in Claim 8, and
R' and R" are the same as or different from each other, and are each independently a $C_{1-10}$ hydrocarbyl group.

**9.** The process for preparing the ethylene homopolymer according to Claim 7, wherein $R_3$ and $R_6$ are each $C_{1-6}$ alkyl, or $C_{2-6}$ alkyl substituted with $C_{1-6}$ alkoxy.

**10.** The process for preparing the ethylene homopolymer according to Claim 7, wherein the second metallocene compound is represented by the following Chemical Formula 2-1:

[Chemical Formula 2-1]

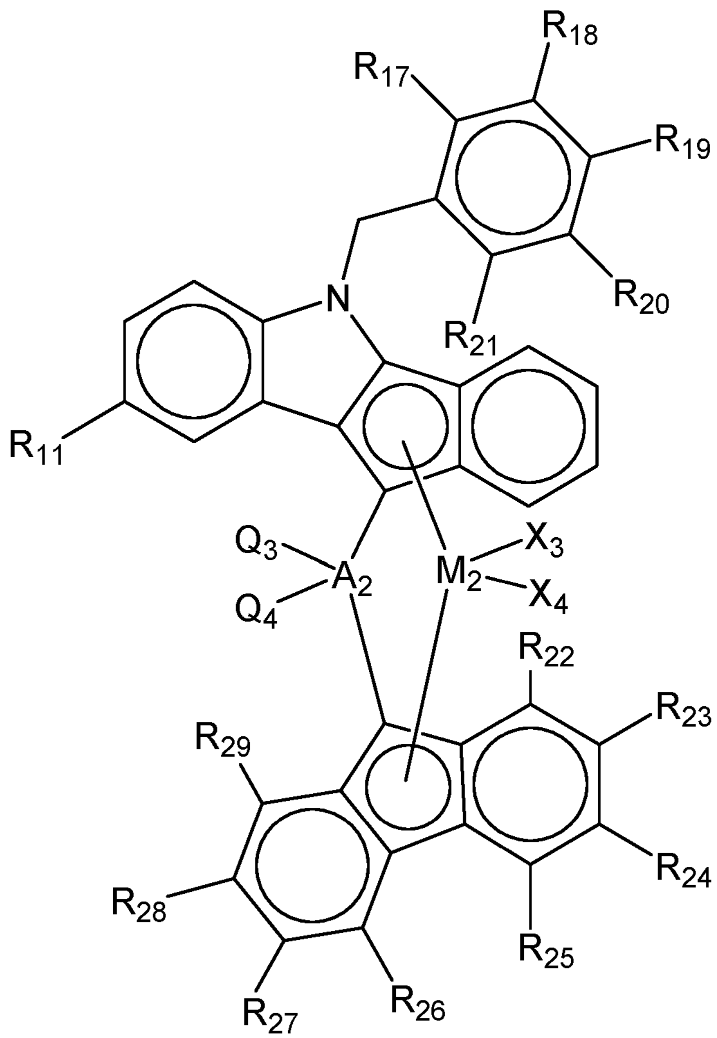

in Chemical Formula 2-1,
$Q_3$, $Q_4$, $A_2$, $M_2$, $X_3$, $X_{24}$, $R_{11}$, and $R_{17}$ to $R_{29}$ are the same as defined in Claim 8.

**11.** The process for preparing the ethylene homopolymer according to Claim 7, wherein $R_{17}$ to $R_{21}$ or $R_{17'}$ to $R_{21'}$ are each hydrogen, or $C_{1-6}$ haloalkyl, provided that any one or more of $R_{17}$ to $R_{21}$ or one or more of $R_{17'}$ to $R_{21'}$ are $C_{1-6}$ haloalkyl.

**12.** The process for preparing the ethylene homopolymer according to Claim 7, wherein the step of polymerizing is performed by introducing a hydrogen gas in an amount of 100 ppm to 150 ppm, based on the content of ethylene.

**13.** A chlorinated polyethylene prepared by reacting the ethylene homopolymer according to any one of Claims 1 to 6 with chlorine.

**14.** The chlorinated polyethylene according to Claim 13, wherein the chlorinated polyethylene has Mooney viscosity (MV) of 50 to 60, as measured under a condition of 121 °C; a hardness of 50 or less, as measured by Shore A in accordance with GB/T53; and a heat of fusion according to residual crystals (DSC 1st heating, 30 °C to 150 °C peak) of 1.5 J/g or less.

**Patentansprüche**

1. Ethylen-Homopolymer, aufweisend

ein $MI_5$, welches ein bei 190°C unter einer Last von 5 kg gemessener Schmelzindex ist, von 0,95 g/10 min bis 1,4 g/10 min,
ein Schmelzflussratenverhältnis $MFRR_{21,6/5}$, welches ein Wert ist, der erhalten wird durch Dividieren des bei 190°C unter einer Last von 21,6 kg gemessenen Schmelzindex durch den bei 190°C unter einer Last von 5 kg gemessenen Schmelzindex in Übereinstimmung mit ASTM D 1238, von 18 bis 22, und
einen Anteil eines hochkristallinen Bereichs auf einem Graph einer temperaturerhöhenden Eluierungsfraktionierung (TREF) von 10 % oder weniger, worin der Anteil des hochkristallinen Bereichs ein Prozentwert ist, der erhalten wird durch Dividieren der Graphfläche des hochkristallinen Bereichs bei einer Eluierungstemperatur von 105°C oder höher durch die gesamte Graphfläche.

2. Ethylen-Homopolymer gemäß Anspruch 1, welches einen $MI_{2,16}$, welcher einer bei 190°C unter einer Last von 2,16 kg gemessener Schmelzindex ist, von 0,01 g/10 min bis 0,45 g/10 min aufweist.

3. Ethylen-Homopolymer gemäß Anspruch 1, worin der Anteil des hochkristallinen Bereichs 3 % bis 10 % beträgt.

4. Ethylen-Homopolymer gemäß Anspruch 1, welches eine Dichte von 0,955 g/cm$^3$ bis 0,960 g/cm$^3$ aufweist.

5. Ethylen-Homopolymer gemäß Anspruch 1, welches eine Molekulargewichtsverteilung Mw/Mn von 5 bis 10 aufweist.

6. Ethylen-Homopolymer gemäß Anspruch 1, welches ein gewichtsgemitteltes Molekulargewicht von 110.000 g/mol bis 250.000 g/mol aufweist.

7. Verfahren zur Herstellung des Ethylen-Homopolymers gemäß irgendeinem der Ansprüche 1 bis 6, umfassend einen Schritt zum Polymerisieren von Ethylen in der Gegenwart von zumindest einer durch die folgende chemische Formel 1 dargestellten ersten Metallocenverbindung; und zumindest einer zweiten Metallocenverbindung, ausgewählt aus durch die folgende Chemische Formel 2 dargestellten Verbindungen, worin das Gewichtsverhältnis der ersten Metallocenverbindung zur zweiten Metallocenverbindung 40:60 bis 45:55 beträgt:

[Chemische Formel 1]

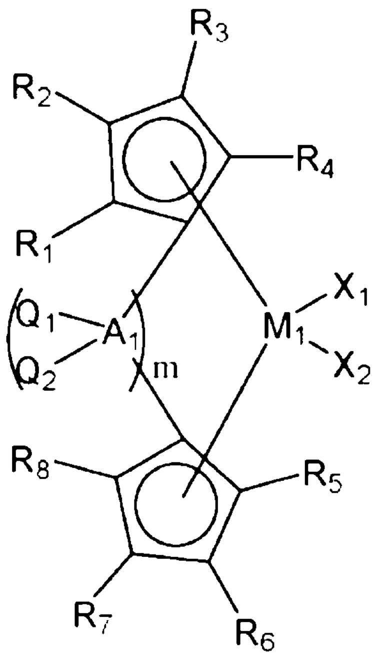

worin in der chemischen Formel 1

irgendeines oder mehrere von $R_1$ bis $R_8$ -$(CH_2)_n$-OR ist/sind, worin R lineares oder verzweigtes $C_{1-6}$-Alkyl ist und n eine ganze Zahl von 2 bis 6 ist;

die restlichen von $R_1$ bis $R_8$ gleich oder voneinander verschieden sind und jeweils unabhängig eine funktionelle Gruppe sind, ausgewählt aus der Gruppe, bestehend aus Wasserstoff, Halogen, $C_{1-20}$-Alkyl, $C_{2-20}$-Alkenyl, $C_{6-20}$-Aryl, $C_{7-40}$-Alkylaryl und $C_{7-40}$-Arylalkyl; oder worin zwei oder mehr benachbarte Substituenten miteinander verbunden sind, um einen aliphatischen oder aromatischen $C_{6-20}$-Ring zu bilden, der unsubstituiert ist oder mit einer $C_{1-10}$-Hydrocarbylgruppe substituiert ist;

$Q_1$ und $Q_2$ gleich oder verschieden sind und jeweils unabhängig Wasserstoff, Halogen, $C_{1-20}$-Alkyl, $C_{2-20}$-Alkenyl, $C_{2-20}$-Alkoxyalkyl, $C_{6-20}$-Aryl, $C_{7-40}$-Alkylaryl oder $C_{7-40}$-Arylalkyl sind;

$A_1$ Kohlenstoff, Silicium oder Germanium ist;

$M_1$ ein Übergangsmetall in Gruppe 4 ist;

$X_1$ und $X_2$ gleich oder voneinander verschieden sind und jeweils unabhängig Halogen, $C_{1-20}$-Alkyl, $C_{2-20}$-Alkenyl, $C_{6-20}$-Aryl, Nitrogruppe, Amidogruppe, $C_{1-20}$-Alkylsilyl, $C_{1-20}$-Alkoxy oder $C_{1-20}$-Sulfonatgruppe sind; und

m eine ganze Zahl von 0 oder 1 ist,

[Chemische Formel 2]

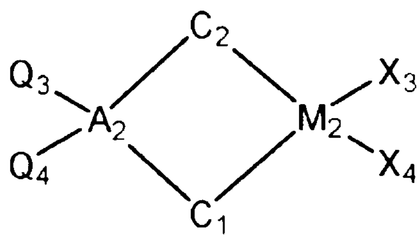

worin in der Chemischen Formel 2

$Q_3$ und $Q_4$ gleich oder verschieden sind und jeweils unabhängig Halogen, $C_{1-20}$-Alkyl, $C_{2-20}$-Alkenyl, $C_{2-20}$-Alkoxyalkyl, $C_{6-20}$-Aryl, $C_{7-40}$-Alkylaryl oder $C_{7-40}$-Arylalkyl sind;

$A_2$ Kohlenstoff, Silicium oder Germanium ist;

$M_2$ ein Übergangsmetall in Gruppe 4 ist;

$X_3$ und $X_4$ gleich oder verschieden sind und jeweils unabhängig Halogen, $C_{1-20}$-Alkyl, $C_{2-20}$-Alkenyl, $C_{6-20}$-Aryl, Nitrogruppe, Amidogruppe, $C_{1-20}$-Alkylsilyl, $C_{1-20}$-Alkoxy oder $C_{1-20}$-Sulfonatgruppe sind; und

irgendeines von $C_1$ und $C_2$ durch die folgende Xhemische Formel 3a oder 3b dargestellt isr und das andere durch die folgende Chemische Formel 3c, 3d oder 3e dargestellt ist:

[Chemische Formel 3a]

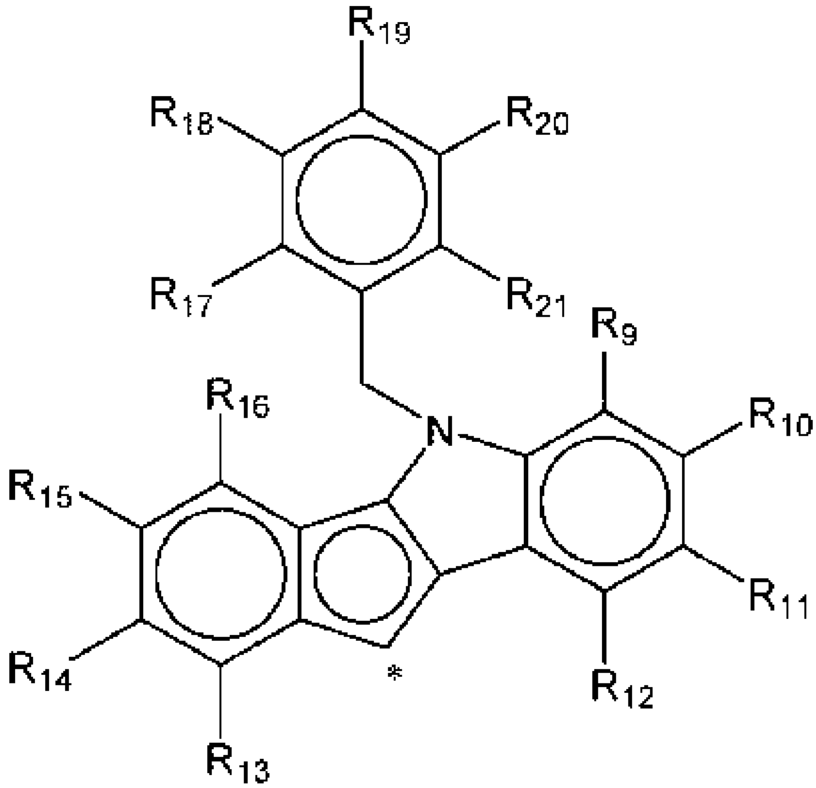

[Chemische Formel 3b]

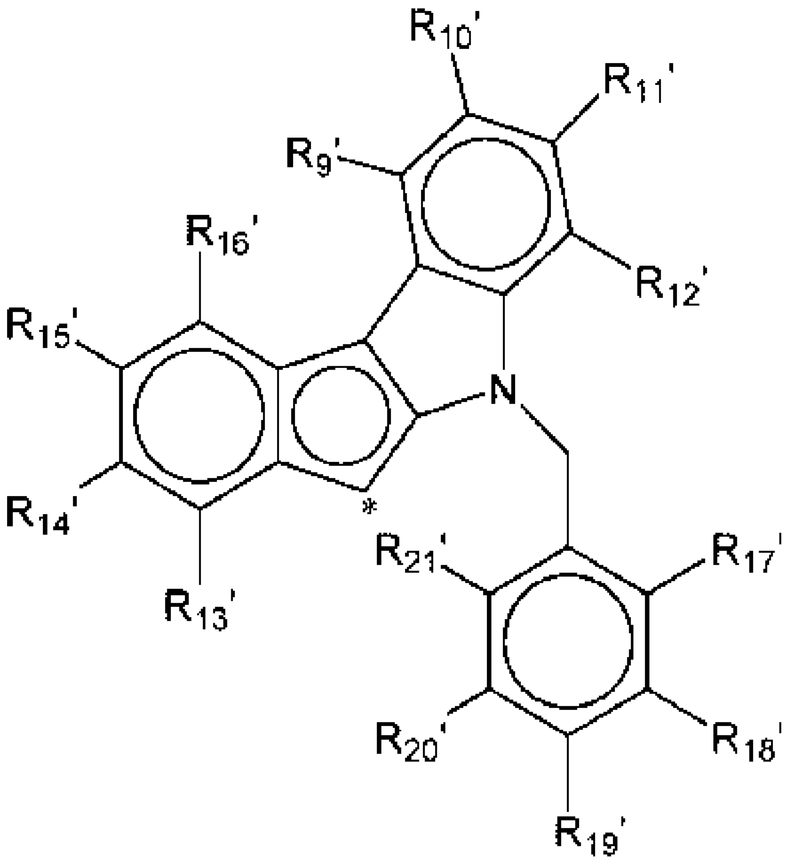

[Chemische Formel 3c]

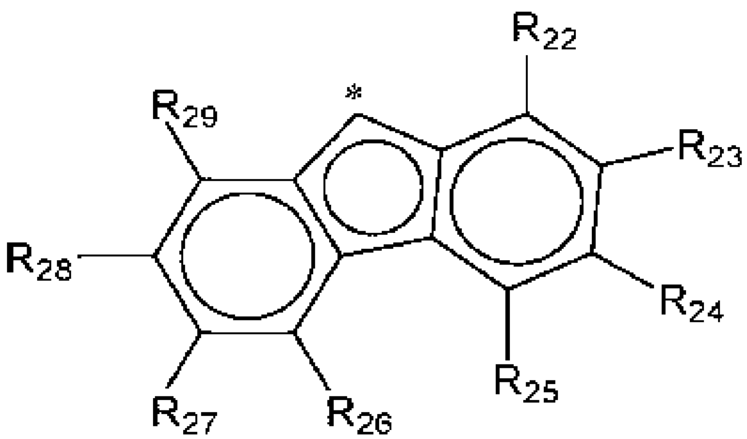

[Chemische Formel 3d]

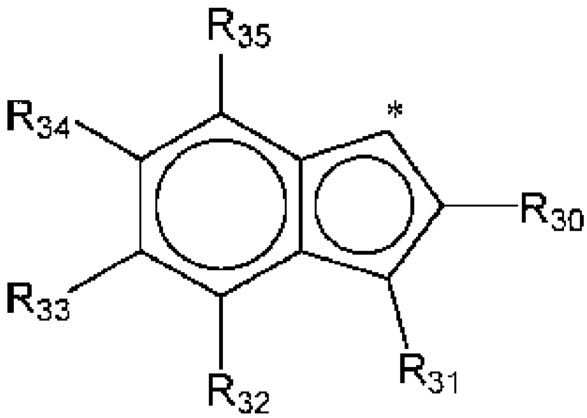

[Chemische Formel 3e]

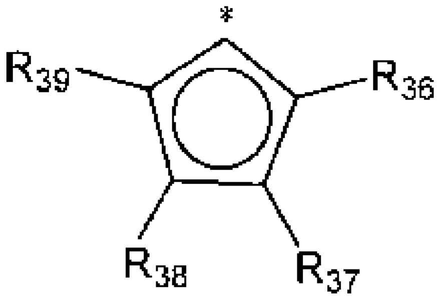

wobei in den chemischen Formeln 3a, 3b, 3c, 3d und 3e $R_9$ bis $R_{21}$ und $R_{9'}$ bis $R_{21'}$ gleich oder voneinander verschieden sind und jeweils unabhängig Wasserstoff, Halogen, $C_{1-20}$-Alkyl, $C_{1-20}$-Haloalkyl, $C_{2-20}$-Alkenyl, $C_{1-20}$-Alkylsilyl, $C_{1-20}$-Silylalkyl, $C_{1-20}$-Alkoxysilyl, $C_{1-20}$-Alkoxy, $C_{6-20}$-Aryl, $C_{7-40}$-Alkylaryl oder $C_{7-40}$-Arylalkyl sind, vorausgesetzt, dass eines oder mehrere von $R_{17}$ bis $R_{21}$ oder eines oder mehrere von $R_{17'}$ bis $R_{21'}$ $C_{1-20}$-Haloalkyl ist/sind;

$R_{22}$ bis $R_{39}$ gleich oder voneinander verschieden sind und jeweils unabhängig Wasserstoff, Halogen, $C_{1-20}$-Alkyl, $C_{1-20}$-Haloalkyl, $C_{2-20}$-Alkenyl, $C_{1-20}$-Alkylsilyl 1-20-Silylalkyl, $C_{1-20}$-Alkoxysilyl, $C_{1-20}$-Alkoxy, $C_{6-20}$-Aryl, $C_{7-40}$-Alkylaryl oder $C_{7-40}$-Arylalkyl sind, oder zwei oder mehr benachbarte $R_{22}$ bis $R_{39}$ miteinander verbunden sind, um einen aliphatischen oder aromatischen $C_{6-20}$-Ring zu bilden, der unsubstituiert ist oder mit einer $C_{1-10}$-Hydrocarbylgruppe substituiert ist; und

* eine Verbindungsstelle an $A_2$ und $M_2$ darstellt.

**8.** Verfahren zur Herstellung des Ethylen-Homopolymers gemäß Anspruch 7, worin die erste Metallocenverbindung durch irgendeine der folgenden chemischen Formeln 1-1 bis 1-4 dargestellt ist:

[Chemische Formel 1-1]

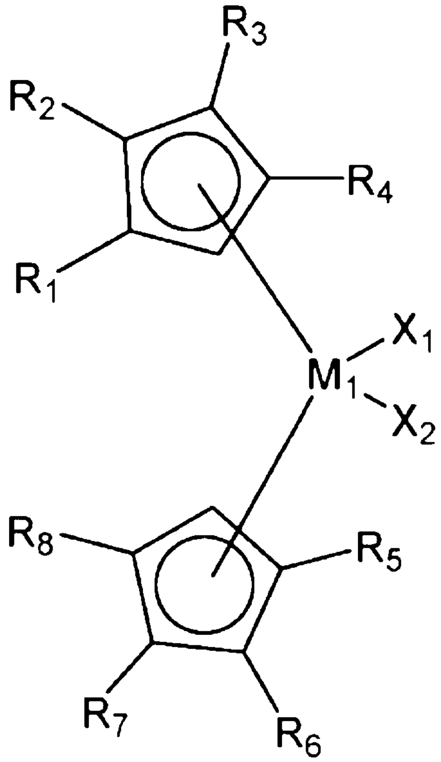

[Chemische Formel 1-2]

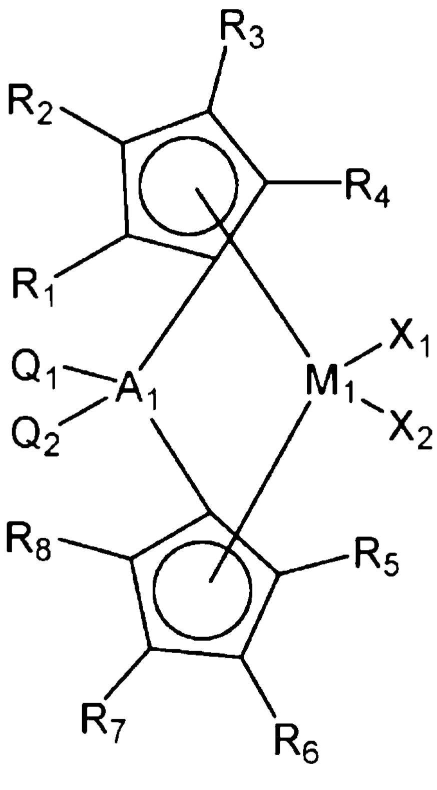

[Chemische Formel 1-3]

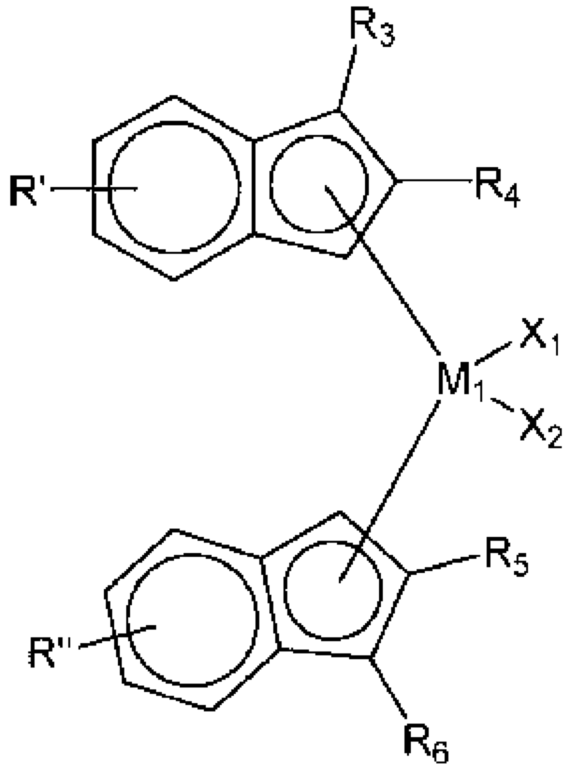

[Chemische Formel 1-4]

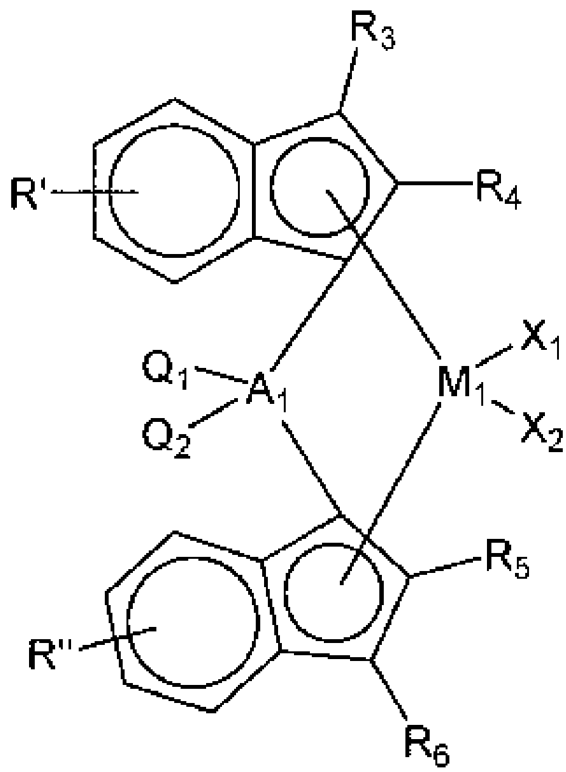

worin in den chemischen Formeln 1-1 bis 1-4

$Q_1$ $Q_2$, $A_1$, $M_1$, $X_1$, $X_2$ und $R_1$ bis $R_8$ die gleichen sind wie in Anspruch 8 definiert, und R' und R" gleich oder verschieden sind und jeweils unabhängig eine $C_{1-10}$-Hydrocarbylgruppe sind.

**9.** Verfahren zur Herstellung des Ethylen-Homopolymers gemäß Anspruch 7, worin $R_3$ und $R_6$ jeweils $C_{1-6}$-Alkyl oder $C_{2-6}$-Alkyl, das mit $C_{1-6}$-Alkoxy substituiert ist, sind.

**10.** Verfahren zur Herstellung des Ethylen-Homopolymers gemäß Anspruch 7, worin die zweite Metallocenverbindung durch die folgende chemische Formel 2-1 dargestellt ist:

[Chemische Formel 2-1]

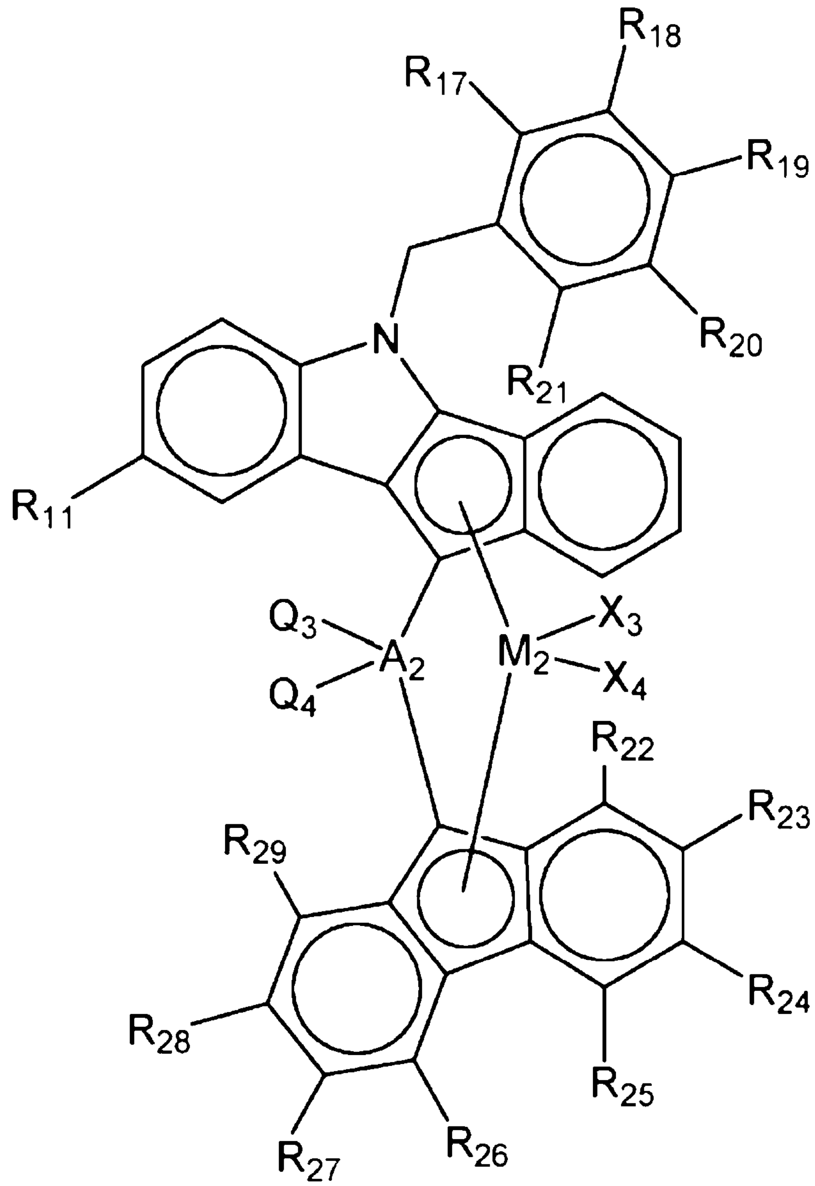

worin in der chemischen Formel 2-1
Q3, $Q_4$, $A_2$, $M_2$, $X_3$, $X_{24}$, $R_{11}$ und $R_{17}$ bis $R_{29}$ die gleichen sind, wie sie in Anspruch 8 definiert sind.

**11.** Verfahren zur Herstellung des Ethylen-Homopolymers gemäß Anspruch 7, worin $R_{17}$ bis $R_{21}$ oder $R_{17'}$ bis $R_{21'}$ jeweils Wasserstoff oder $C_{1-6}$-Haloalkyl sind, vorausgesetzt,
dass irgendeines oder mehrere von $R_{17}$ bis $R_{21}$ oder eines oder mehrere von $R_{17'}$ bis $R_{21'}$ $C_{1-6}$-Haloalkyl ist/sind.

**12.** Verfahren zur Herstellung des Ethylen-Homopolymers gemäß Anspruch 7, worin der Schritt zum Polymerisieren durch Einführen eines Wasserstoffgases in einer Menge von 100 ppm bis 150 ppm durchgeführt wird, bezogen auf die Menge von Ethylen.

**13.** Chloriertes Polyethylen, hergestellt durch Umsetzen des Ethylen-Homopolymers gemäß irgendeinem der Ansprüche 1 bis 6 mit Chlor.

**14.** Chloriertes Polyethylen gemäß Anspruch 13, worin das chlorierte Polyethylen eine Mooney-Viskosität (MV) von 50 bis 60 aufweist, gemessen unter einer Bedingung von 121°C, eine Härte von 50 oder weniger aufweist, gemessen als Shore A in Übereinstimmung mit GB/T53; und eine Schmelzwärme gemäß der residualen Kristalle (DSC 1. Erwärmung, 30°C bis 150°C-Peak) von 1,5 J/g oder kleiner aufweist.

**Revendications**

**1.** Homopolymère d'éthylène, présentant

un $MI_5$, qui est l'indice de fluidité mesuré à 190 °C sous une charge de 5 kg, compris entre 0,95 g/10 min et 1,4 g/10 min,
un rapport de vitesse d'écoulement à l'état fondu $MFRR_{21,6/5}$, valeur obtenue en divisant l'indice de fluidité mesuré à 190 °C sous une charge de 21,6 kg par l'indice de fluidité mesuré à 190 °C sous une charge de 5 kg conformément à la norme ASTM D 1238, compris entre 18 et 22, et
un rapport de région hautement cristalline sur un graphique de fractionnement par élution à température croissante (TREF) inférieur ou égal à 10 %, dans lequel le rapport de région hautement cristalline est une valeur en pourcentage obtenue en divisant une aire graphique de la région hautement cristalline à une température d'élution de 105 °C ou plus par une aire graphique totale.

**2.** Homopolymère d'éthylène selon la revendication 1, présentant un $MI_{2,16}$, qui est un indice de fluidité mesuré à 190 °C sous une charge de 2,16 kg, de 0,01 g/10 min à 0,45 g/10 min.

**3.** Homopolymère d'éthylène selon la revendication 1, dans lequel le rapport de la région hautement cristalline est de 3 % à 10 %.

**4.** Homopolymère d'éthylène selon la revendication 1, présentant une densité comprise entre 0,955 $g/cm^3$ et 0,960 $g/cm^3$.

**5.** Homopolymère d'éthylène selon la revendication 1, qui présente une distribution de poids moléculaire Mw/Mn comprise entre 5 et 10.

**6.** Homopolymère d'éthylène selon la revendication 1, qui présente une masse moléculaire moyenne en poids comprise entre 110 000 g/mol et 250 000 g/mol.

**7.** Procédé de préparation de l'homopolymère d'éthylène selon l'une quelconque des revendications 1 à 6, comprenant l'étape de polymérisation de l'éthylène en présence d'au moins un premier composé métallocène représenté par la Formule chimique 1 suivante ; et d'au moins un second composé métallocène sélectionné parmi les composés représentés par la Formule chimique 2 suivante, dans lequel le rapport pondéral du premier composé métallocène et du deuxième composé métallocène est compris entre 40:60 et 45:55 :

[Formule chimique 1]

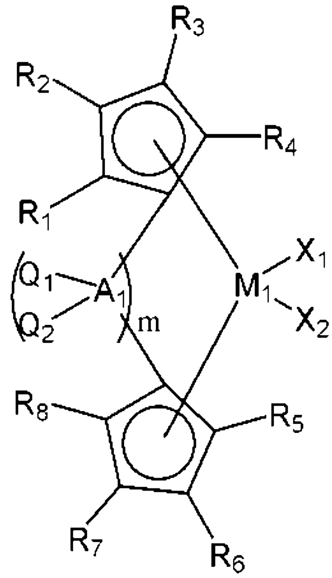

dans la Formule chimique 1,

un quelconque ou plusieurs de $R_1$ à $R_8$ sont $-(CH_2)_n-OR$, dans lequel R est un alkyle linéaire ou ramifié en $C_{1-6}$, et n est un entier compris entre 2 et 6 ;
le reste de $R_1$ à $R_5$ sont identiques ou différents les uns des autres, et sont chacun de façon indépendante un groupe fonctionnel sélectionné parmi le groupe constitué par l'hydrogène, un halogène, un groupe alkyle en $C_{1-20}$, alkényle en $C_{2-20}$, aryle en $C_{6-20}$, alkylaryle en $C_{7-40}$ et arylalkyle en $C_{7-40}$ ; ou deux ou plusieurs des substituants qui sont adjacents les uns aux autres sont reliés entre eux pour former un cycle aliphatique ou aromatique en $C_{6-20}$ non substitué ou substitué par un groupe hydrocarbyle en $C_{1-10}$ ;
$Q_1$ et $Q_2$ sont identiques ou différents les uns des autres et sont chacun de façon indépendante l'hydrogène, un halogène, un groupe alkyle en $C_{1-20}$, alkényle en $C_{2-20}$, alkoxyalkyle en $C_{2-20}$, aryle en $C_{6-20}$, alkylaryle en $C_{7-40}$ou arylalkyle en $C_{7-40}$ ;
$A_1$ est le carbone, le silicium ou le germanium ;
$M_1$ est un métal de transition du Groupe 4 ;
$X_1$ et $X_2$ sont identiques ou différents les uns des autres et chacun est de façon indépendante un halogène, un groupe alkyle en $C_{1-20}$, alkényle en $C_{2-20}$, aryle en $C_{6-20}$, un groupe nitro, un groupe amido, alkylsilyle en $C_{1-20}$ alkylsilyle, alkoxy en $C_{1-20}$ ou un groupe sulfonate en $C_{1-20}$; et
m est un nombre entier de 0 ou 1,

[Formule chimique 2]

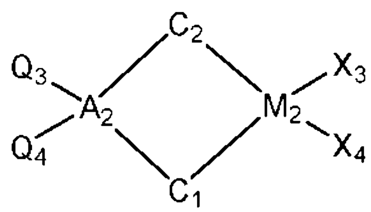

dans la Formule chimique 2,
$Q_3$ et $Q_4$ sont identiques ou différents l'un de l'autre, et sont chacun de façon indépendante l'hydrogène, un halogène, un groupe alkyle en $C_{1-20}$, alkényle en $C_{2-20}$, alkoxyalkyle en $C_{2-20}$, aryle en $C_{6-20}$, alkylaryle en $C_{7-40}$ ou arylalkyle en $C_{7-40}$ ;
$A_2$ est le carbone, le silicium ou le germanium ;

$M_2$ est un métal de transition du Groupe 4 ;
$X_3$ et $X_4$ sont identiques ou différents l'un de l'autre et sont chacun de façon indépendante un halogène, un groupe alkyle en $C_{1-20}$, alkényle en $C_{2-20}$, aryle en $C_{6-20}$, un groupe nitro, un groupe amido, alkylsilyle en $C_{1-20}$, alkoxy en $C_{1-20}$ ou un groupe sulfonate en $C_{1-20}$ ; et
l'un quelconque de $C_1$ et $C_2$ est représenté par la Formule chimique 3a ou 3b, et l'autre est représenté par la Formule chimique 3c, 3d ou 3e ;

[Formule chimique 3a]

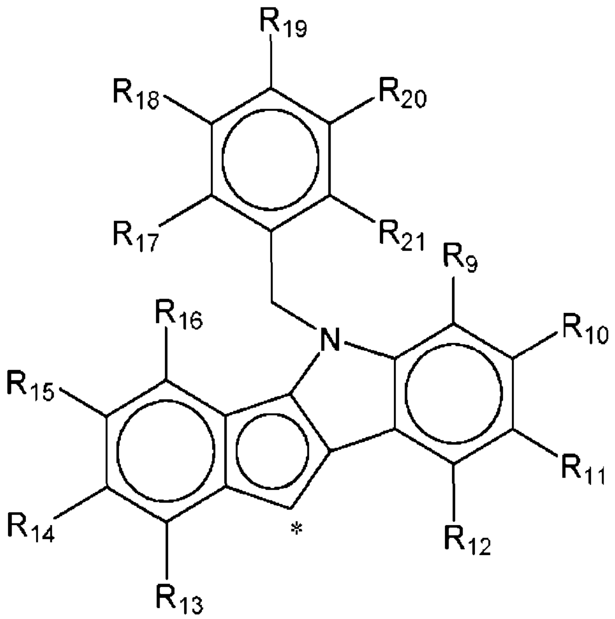

[Formule chimique 3b]

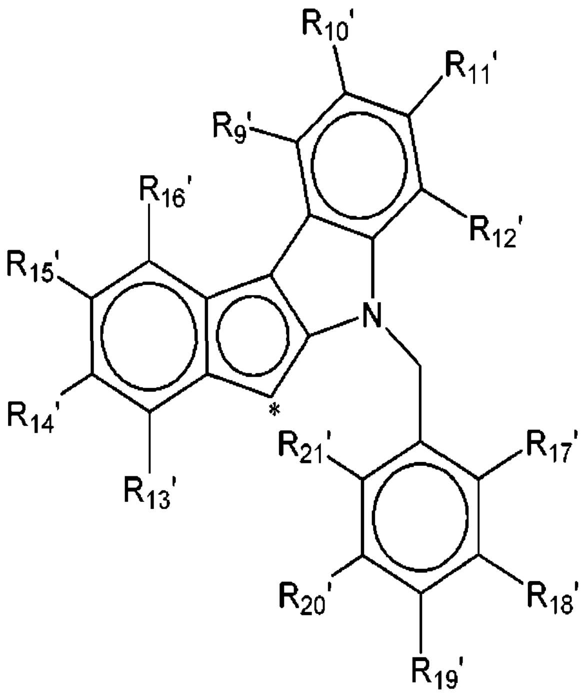

[Formule chimique 3c]

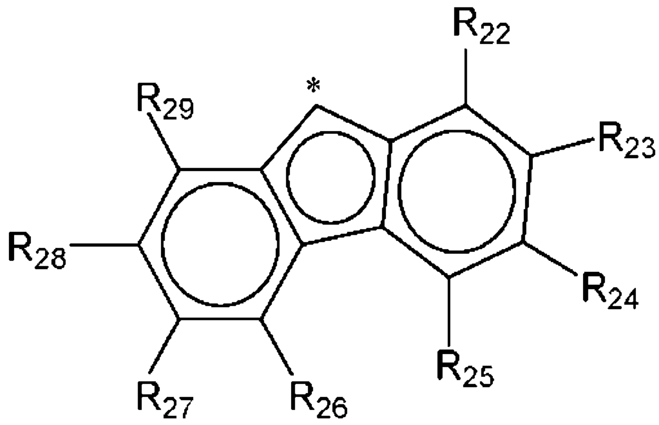

[Formule chimique 3d]

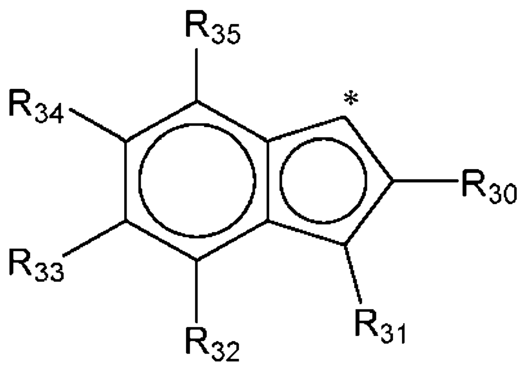

[Formule chimique 3e]

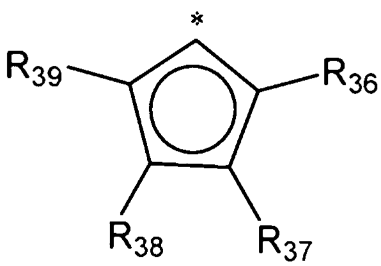

dans les formules chimiques 3a, 3b, 3c, 3d et 3e, $R_9$ à $R_{21}$ et $R_{9'}$ à $R_{21'}$ sont identiques ou différents l'un de l'autre et sont chacun de façon indépendante l'hydrogène, un halogène, un groupe alkyle en $C_{1-20}$, haloalkyle en $C_{1-20}$, alkényle en $C_{2-20}$, alkylsilyle en $C_{1-20}$, silylalkyle **en** $C_{1-20}$, alkoxysilyle en $C_{1-20}$, alkoxy en $C_{1-20}$, aryle en $C_{6-20}$, alkylaryle en $C_{7-40}$, ou arylalkyle en $C_{7-40}$, étant entendu que un ou plusieurs de $R_{17}$ à $R_{21}$ ou un ou plusieurs de $R_{17'}$ à $R_{21'}$ sont un groupe haloalkyle en $C_{1-20}$ ;
$R_{22}$ à $R_{39}$ sont identiques ou différents l'un de l'autre et sont chacun de façon indépendante l'hydrogène, un halogène, un groupe alkyle en $C_{1-20}$, haloalkyle en $C_{1-20}$, alkényle en $C_{2-20}$, alkylsilyle en $C_{1-20}$, silylalkyle en $C_{1-20}$, alkoxysilyle en $C_{1-20}$, alkoxy en $C_{1-20}$, aryle en $C_{6-20}$, alkylaryle en $C_{7-40}$, ou arylalkyle en $C_{7-40}$, ou deux ou plus de $R_{22}$ à $R_{39}$ qui sont adjacents l'un à l'autre sont connectés l'un avec l'autre pour former un cycle aliphatique ou aromatique en $C_{6-20}$ non substitué ou substitué par un groupe hydrocarbyle en $C_{1-10}$ ; et
* représente un site de liaison à $A_2$ et $M_2$.

**8.** Procédé de préparation de l'homopolymère d'éthylène selon la revendication 7, dans laquelle le premier composé

métallocène est représenté par l'une quelconque des formules chimiques 1-1 à 1-4 suivantes :

[Formule chimique 1-1]

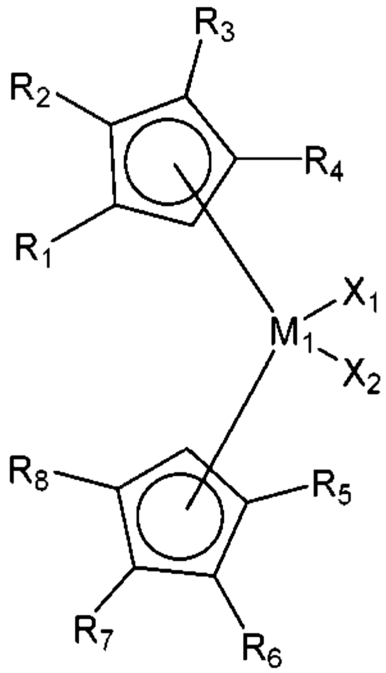

[Formule chimique 1-2]

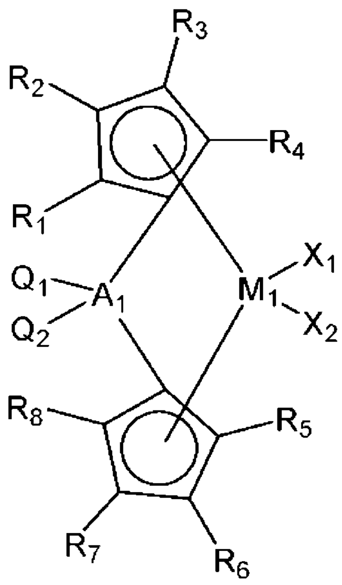

[Formule chimique 1-3]

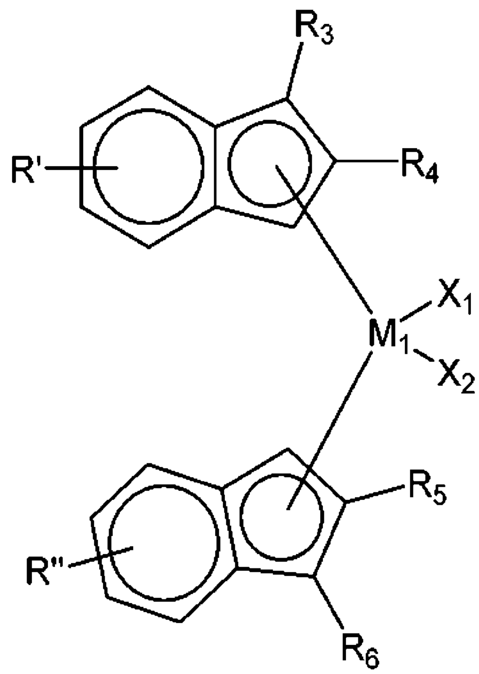

[Formule chimique 1-4]

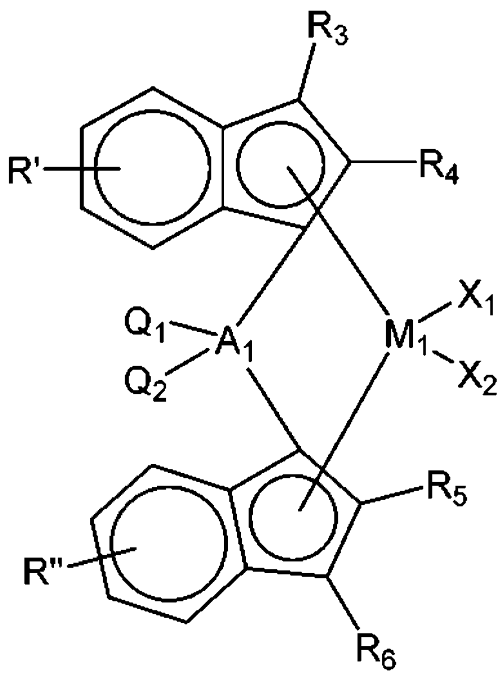

dans les Formules chimiques 1-1 à 1-4,

$Q_1$, $Q_2$, $A_1$, $M_1$, $X_1$, $X_2$ et $R_1$ à $R_8$ sont les mêmes que définis dans la Revendication 8, et
R' et R" sont identiques ou différents l'un de l'autre et sont chacun de façon indépendante un groupe hydrocarbyle en $C_{1-10}$.

**9.** Procédé de préparation de l'homopolymère d'éthylène selon la revendication 7, dans lequel $R_3$ et $R_6$ sont chacun un groupe alkyle en $C_{1-6}$ ou alkyle en $C_{2-6}$ substitué par un groupe alkoxy en $C_{1-6}$.

10. Procédé de préparation de l'homopolymère d'éthylène selon la revendication 7, dans lequel le second composé de métallocène est représenté par la Formule chimique 2-1 suivante :

[Formule chimique 2-1]

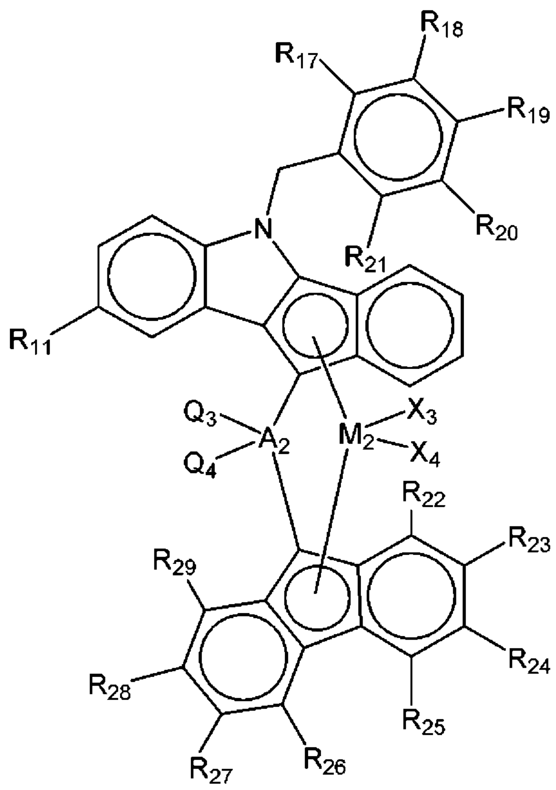

dans la Formule chimique 2-1,

$Q_3$, $Q_4$, $A_2$, $M_2$, $X_3$, $X_{24}$, $R_{11}$, et $R_{17}$ à $R_{29}$ sont les mêmes que définis dans la revendication 8.

11. Procédé de préparation de l'homopolymère d'éthylène selon la revendication 7, dans lequel $R_{17}$ à $R_{21}$ ou $R_{17'}$ à $R_{21'}$ sont chacun l'hydrogène ou un groupe haloalkyle en $C_{1-6}$, étant entendu qu'un ou plus de $R_{17}$ à $R_{21}$ ou un ou plusieurs de $R_{17'}$ à $R_{21'}$ sont un groupe haloalkyle en $C_{1-6}$.

12. Procédé de préparation de l'homopolymère d'éthylène selon la revendication 7, dans lequel l'étape de polymérisation est réalisée en introduisant de l'hydrogène gazeux en une quantité de 100 ppm à 150 ppm, sur la base de la teneur en éthylène.

13. Polyéthylène chloré préparé en faisant réagir le polyéthylène selon l'une quelconque des revendications 1 à 6 avec du chlore.

14. Polyéthylène chloré selon la revendication 13, dans lequel le polyéthylène chloré présente une viscosité Mooney (MV) de 50 à 60, mesurée dans des conditions de 121 °C ; une dureté inférieure ou égale à 50, mesurée selon Shore A conformément à la norme GB/T53 ; et une chaleur de fusion selon les cristaux résiduels (DSC$^{1er}$ chauffage, 30 °C à 150 °C pic) inférieure ou égale à 1,5 J/g.

【FIG. 1】

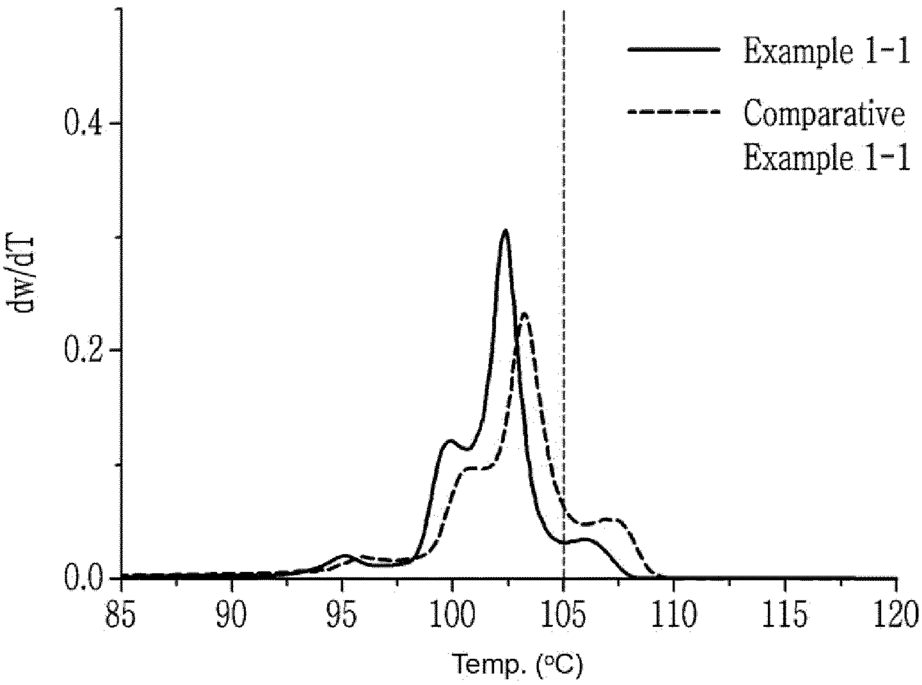
Example 1-1
Comparative Example 1-1
dw/dT
0.0
0.2
0.4
85
90
95
100
105
110
115
120
Temp. (°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200070525
- KR 1020210075020
- EP 3778664 A1
- KR 1020170030924
- EP 3770185 A


### Non-patent literature cited in the description


- *Tetrahedron Lett.*, 1988, 2951